# EUROPEAN PATENT APPLICATION

(11) **EP 4 827 195 A1**
(43) Date of publication of application: **21.10.2026**
(21) Application number: 24925644.7
(22) Date of filing: 25.12.2024
(51) Int. Cl.: H04W 68/02

(54) **COMMUNICATION METHOD AND APPARATUS, AND STORAGE MEDIUM**

(30) Priority: 19.02.2024 CN 202410185831
(71) Applicant: Honor Device Co., Ltd., Shenzhen, Guangdong 518040 (CN)
(72) Inventor: CAO, Yongzhao, Shenzhen, Guangdong 518040 (CN); SHAN, Baokun, Shenzhen, Guangdong 518040 (CN); ZENG, YongBo, Shenzhen, Guangdong 518040 (CN)
(74) Representative: MERH-IP Matias Erny Reichl Hoffmann Patentanwälte PartG mbB
(86) International application number: PCT/CN2024/142176
(87) International publication number: WO 2025/175907

(57) **Abstract**

Embodiments of this application provide a communication method and apparatus, and a storage medium. The communication method may include: A network device determines configuration information; the network device sends the configuration information to a terminal device; and the network device determines a paging window based on the configuration information, where the paging window is smaller than a paging cycle of the terminal device, and the network device does not send a paging message outside the paging window within the paging cycle. By using the embodiments of this application, the network device may send the paging message through the paging window smaller than the paging cycle, and does not send a paging message outside the paging window within the paging cycle, which can reduce power consumption of the network device.

## Description

This application claims priority to Chinese Patent Application No. 202410185831.4, filed with the China National Intellectual Property Administration on February 19, 2024 and entitled "COMMUNICATION METHOD AND APPARATUS, AND STORAGE MEDIUM", which is incorporated herein by reference in its entirety.

### TECHNICAL FIELD

This application relates to the field of communication technologies, and in particular, to a communication method and apparatus, and a storage medium.

### BACKGROUND

The energy cost of mobile networks accounts for most of the total cost of operators, and most of the energy consumption comes from radio access networks. Therefore, how to reduce the energy consumption of the network device is a technical problem urgently to be resolved by a person skilled in the art.

To reduce power consumption for a terminal device (for example, a user terminal (user equipment, UE)) to obtain a paging (paging) message, a discontinuous reception (discontinuous reception, DRX) technology may be used to periodically obtain the paging message according to a DRX cycle. In the time domain, the terminal device attempts to receive the paging message in a specific subframe (that is, a paging occasion (PO) of the paging frame (PF) in the DRX cycle.

Currently, if a DRX cycle includes N PFs, the N PFs are evenly allocated to a system frame in the DRX cycle, and each PF is used to carry a same quantity of terminal devices. In other words, the network device sends paging messages of different terminal devices by using evenly distributed time domain resources. However, a sending occasion of the paging message of the terminal device is random, and the network device may need to send the paging message at any time. As a result, the network device cannot perform deep sleep, and an energy saving effect of the terminal device is difficult to improve.

### SUMMARY

Embodiments of this application disclose a communication method and an apparatus, and a storage medium. A network device may send the paging message through the paging window smaller than the paging cycle, and does not send a paging message outside the paging window within the paging cycle, thereby which can reduce power consumption of the network device.

In a first aspect, an embodiment of this application provides a first communication method. The method may be performed by a network device, or by some components (for example, a processor, a chip, or a chip system) in the network device, or by a logic module or software that can implement all or a part of functions of the network device. By taking the network device as an example below, the method includes: determining, by a network device, configuration information; and sending, by the network device, the configuration information to a terminal device; and determining, by the network device, a paging window based on the configuration information, where the network device does not send a paging message outside the paging window within the paging cycle.

The paging window is smaller than the paging cycle of the terminal device.

Optionally, the method further includes: sending, by the network device, a paging message to the terminal device based on the paging window.

It may be understood that, by implementing the first communication method, the network device may send the paging message through the paging window smaller than the paging cycle, and does not send a paging message outside the paging window within the paging cycle, thereby which can reduce power consumption of the network device.

With reference to the first aspect, in some feasible examples, determining, by the network device, configuration information includes: obtaining, by the network device, N1 sets of preconfigured configurations, where N1 is a quantity of paging frames in the paging window, and each configuration in the N1 sets of configurations indicates locations and sizes of different paging windows and locations of paging frames in the paging window; and determining, by the network device, the configuration information from the N1 sets of configurations by using a common group physical downlink control channel. In this way, flexibility and configuration efficiency of the configuration information may be improved.

In a second aspect, an embodiment of this application provides a second communication method. The method may be performed by a terminal device, or by components (for example, a processor, a chip, or a chip system) in the terminal device, or by a logic module or software that can implement all or a part of functions of the terminal device. By taking the terminal device as an example below, the method includes: receiving, by the terminal device, configuration information from a network device; and determining, by the terminal device, a paging window based on the configuration information, where the terminal device does not obtain a paging message outside the paging window within the paging cycle.

The paging window is smaller than the paging cycle of the terminal device.

Optionally, the method further includes: obtaining, by the terminal device, the paging message based on the paging window.

It may be understood that, by implementing the second communication method, the network device may send the paging message through the paging window smaller than the paging cycle, and does not send a paging message outside the paging window within the paging cycle, thereby which can reduce power consumption of the network device.

With reference to the first aspect or the second aspect, in some feasible examples, the paging cycle is a DRX cycle.

With reference to the first aspect or the second aspect, in some feasible examples, the determining the paging window based on the configuration information includes: determining a location and a size of the paging window based on the configuration information, and determining a location of a paging frame of the terminal device in the paging window.

With reference to the first aspect or the second aspect, in some feasible examples, the configuration information includes a size of the paging window, and a start location of the paging window is a predefined location, or the start location of the paging window is configured by the configuration information; and the method includes: determining the location of the paging frame of the terminal device in the paging window based on the start location and the size of the paging window, an identifier of the terminal device, and a quantity and an offset of paging frames in the paging window; and determining the location of the paging frame of the terminal device in the paging window based on the start location and the size of the paging window and the identifier of the terminal device.

With reference to the first aspect or the second aspect, in some feasible examples, the start location of the paging window is a predefined location, and the predefined location includes a start location of a paging cycle or a start location of a discontinuous reception cycle.

With reference to the first aspect or the second aspect, in some feasible examples, the configuration information includes a start location and an end location of the paging window; and the method includes: determining a size of the paging window based on the start location and the end location of the paging window; and determining a location of a paging frame of the terminal device in the paging window based on the size of the paging window, the identifier of the terminal device, and the quantity and offset of paging frames in the paging window; and determining the location of the paging frame of the terminal device in the paging window based on the start location and the size of the paging window and the identifier of the terminal device.

With reference to the first aspect, in some feasible examples, the method further includes: sending, by the network device, a paging message to the terminal device based on the location of the paging frame of the terminal device in the paging window.

With reference to the second aspect, in some feasible examples, the method further includes: obtaining, by the terminal device, the paging message based on the location of the paging frame of the terminal device in the paging window.

With reference to the first aspect or the second aspect, in some feasible examples, the location of the paging frame of the terminal device in the paging window is obtained according to the following formula: $\left(SFN+PF_offset\right) mod M = \left(M div N1\right) * \left(UE_ID mod N1\right) ,$ where
M represents the size of the paging window, N1 represents the quantity of paging frames in the paging window, UE_ID represents the identifier of the terminal device, SFN represents a system frame number of the paging frame of the terminal device in the paging window, and PF_offset represents the offset set for the paging frame, PF_offset represents an offset reconfigured by the configuration information, or PF_offset represents an originally set offset value.

With reference to the first aspect or the second aspect, in some feasible examples, the location of the paging frame of the terminal device in the paging window is obtained according to the following formula: $\left(SFN+PF_offset\right) mod M = \left(M div N\right) * \left(UE_ID mod N\right) ,$ where
M represents the size of the paging window, N represents the quantity of paging frames within the paging cycle, N is equal to the quantity of paging frames within the paging window, UE_ID represents the identifier of the terminal device, SFN represents a system frame number of the paging frame of the terminal device in the paging window, and PF_offset represents the offset set for the paging frame, PF_offset represents an offset reconfigured by the configuration information, or PF_offset represents an originally set offset value.

With reference to the first aspect or the second aspect, in some feasible examples, the location of the paging frame of the terminal device in the paging window is obtained according to the following formula: $SFN = PW_start + UE id mod M ,$ where
M represents the size of the paging window, SFN represents a system frame number of the paging frame of the terminal device in the paging window, UE_ID represents the identifier of the terminal device, and PW_start represents the start location of the paging window.

With reference to the first aspect or the second aspect, in some feasible examples, the method further includes: determining the location of the paging occasion of the paging frame of the terminal device in the paging window based on the configuration information.

With reference to the first aspect or the second aspect, in some feasible examples, the determining the location of the paging occasion of the paging frame of the terminal device in the paging window based on the configuration information includes: determining the location of the paging occasion of the paging frame of the terminal device in the paging window based on the quantity of paging frames in the paging window, the quantity of paging occasions in the paging frame, and the identifier of the terminal device.

With reference to the first aspect, in some feasible examples, the method further includes: sending, by the network device, a paging message to the terminal device based on the location of the paging occasion of the paging frame of the terminal device in the paging window.

With reference to the second aspect, in some feasible examples, the method further includes: obtaining, by the terminal device, the paging message based on the location of the paging occasion of the paging frame of the terminal device in the paging window.

With reference to the first aspect or the second aspect, in some feasible examples, the paging occasion of the paging frame of the terminal device in the paging window is a (i_s+1)^{th} paging opportunity in the paging frame, and i_s is obtained according to the following formula: $i _ s = floor \left(UE_ID/N1\right) mod Ns ,$ where
UE_ID represents the identifier of the terminal device, N1 represents the quantity of paging frames in the paging window, and Ns represents the quantity of paging occasions in the paging frame.

With reference to the first aspect or the second aspect, in some feasible examples, the paging occasion of the paging frame of the terminal device in the paging window is a (i_s+1)^{th} paging opportunity in the paging frame, and i_s is obtained according to the following formula: $i _ s = floor \left(UE_ID/N\right) mod Ns ,$ where
UE_ID represents the identifier of the terminal device, N represents the quantity of paging frames within the paging cycle, N is equal to the quantity of paging frames within the paging window, and Ns represents the quantity of paging occasions in the paging frame.

With reference to the first aspect or the second aspect, in some feasible examples, the configuration information further includes at least one of the following: the quantity of paging frames in the paging window, the offset of paging frames in the paging window, and the quantity of paging occasions of paging frames in the paging window.

With reference to the first aspect or the second aspect, in some feasible examples, the size of the paging window is represented by using a quantity of time domain resource granularities, and the time domain resource granularity includes at least one of the following: a superframe, a frame, a slot, a sub-slot, and a symbol.

With reference to the first aspect or the second aspect, in some feasible examples, the start location of the paging window is indicated by using a bitmap, and a quantity of bits of the bitmap is determined based on a quotient between a total quantity of system frames within the paging cycle and the time domain resource granularity for indication; and, a value corresponding to each bit in the bitmap indicates whether a location of a system frame corresponding to the bit is the start location of the paging window, and the indicated time domain resource granularity for indication is a difference between system frame numbers corresponding to two adjacent bits in the bitmap; or the start location of the paging window is indicated by using the offset of the start location of the paging cycle.

With reference to the first aspect or the second aspect, in some feasible examples, the identifier of the terminal device includes an international mobile subscriber identity IMSI, a temporary mobile subscriber identity S-TMSI, and a cell radio network temporary identifier C-RNTI.

In a third aspect, an embodiment of this application discloses a third communication method. This method may be performed by a network device, or by some components (for example, a processor, a chip, or a chip system) in the network device, or by a logic module or software that can implement all or a part of functions of the network device. By taking the network device as an example below, the method includes: determining, by a network device, configuration information, where the configuration information includes an aggregation factor, and the aggregation factor is an integer greater than 1; sending, by the network device, the configuration information to a terminal device; and determining, by the network device, the location of the paging frame of the terminal device within the paging cycle based on the aggregation factor, the paging cycle, the quantity and offset of paging frames within the paging cycle, and the identifier of the terminal device.

Optionally, the method further includes: sending, by the network device, a paging message to the terminal device based on the location of the paging frame of the terminal device within the paging cycle.

In a fourth aspect, an embodiment of this application discloses a fourth communication method. This method may be performed by a terminal device, or by some components (for example, a processor, a chip, or a chip system) in the terminal device, or by a logic module or software that can implement all or a part of functions of the terminal device. The terminal device is used as an example below. The method includes: receiving, by a terminal device, configuration information from a network device, where the configuration information includes an aggregation factor, and the aggregation factor is an integer greater than 1; and determining, by the terminal device, the location of the paging frame of the terminal device within the paging cycle based on the aggregation factor, the paging cycle, the quantity and offset of paging frames within the paging cycle, and the identifier of the terminal device.

Optionally, the method further includes: obtaining, by the terminal device, a paging message based on a location of a paging frame of the terminal device within the paging cycle.

With reference to the third aspect or the fourth aspect, in some feasible examples, the location of the paging frame of the terminal device within the paging cycle is obtained according to the following formula: $\left(SFN+PF_offset\right) mod T = \left(T div N\right) / X * \left(UE_ID mod N\right) ,$ where
SFN represents a system frame number of the paging frame of the terminal device within the paging cycle, PF_offset represents an offset of the paging frame, T represents the paging cycle, and UE_ID represents the identifier of the terminal device; and N represents the quantity of paging frames within the paging cycle.

It may be understood that, by implementing the third communication method or the fourth communication method, the network device may aggregate the paging frames that are originally scattered within the paging cycle into an area. The area may be referred to as a paging window. In this way, the network device sends the paging message by using an area within a partial paging cycle, so that there is an area in which no paging message is sent within the paging cycle, which can reduce power consumption of the network device.

According to a fifth aspect, an embodiment of this application provides a communication apparatus. The communication apparatus includes units or modules or means for performing the first aspect, the second aspect, the third aspect or the fourth aspect or each step in any aspect.

In a sixth aspect, this application discloses a fifth communication apparatus. The communication apparatus may be a network device, a terminal device, or the like, or may include an apparatus in these devices, for example, a chip, a chip system, or a circuit, or an apparatus that can implement related functions. The communication apparatus includes a processor. The processor is configured to execute an instruction stored in a memory. When being executed, the instruction implements the communication method in the first aspect, the second aspect, the third aspect or the fourth aspect or feasible examples in any aspect.

In some feasible examples, the communication apparatus further includes one or more of a memory and a transceiver. The transceiver is configured to transmit and receive data and/or signaling.

In a seventh aspect, an embodiment of this application discloses a computer-readable storage medium. The computer-readable storage medium stores a computer program. When running in one or more processors, the computer program implements the communication method in the first aspect, the second aspect, the third aspect or the fourth aspect or feasible examples in any aspect.

According to an eighth aspect, an embodiment of this application provides a computer program product. The computer program product is configured to store a computer program. When run on a computer, the computer program enables the computer to perform the communication method in the first aspect, the second aspect, the third aspect or the fourth aspect or feasible examples in any aspect.

In a ninth aspect, an embodiment of this application discloses a first chip, including a processor and a memory. The processor is configured to invoke from the memory and execute an instruction stored in the memory, so that a device provided with the chip implements the communication method in the first aspect, the second aspect, the third aspect or the fourth aspect or feasible examples in any aspect.

In a tenth aspect, an embodiment of this application discloses a second chip, including: an input interface, an output interface and a processing circuit, where the input interface, the output interface, and the processing circuit are connected through an internal connection path, and the processing circuit is configured to implement the communication method in the first aspect, the second aspect, the third aspect or the fourth aspect or feasible examples in any aspect.

In an eleventh aspect, an embodiment of this application discloses a third chip, including an input interface, an output interface, and a processor, and further optionally includes a memory, where the input interface, the output interface, the processor, and the memory are connected through an internal connection path. The processor is configured to execute a code in the memory. When the code is executed, the processor is configured to implement the communication method in the first aspect, the second aspect, the third aspect or the fourth aspect or feasible examples in any aspect.

In a twelfth aspect, an embodiment of this application discloses a chip system, including at least one processor, a memory, and an interface circuit, where the memory, the transceiver, and the at least one processor are interconnected through a line, and the at least one memory stores a computer program. When the computer program is run in the processor to implement the communication method in the first aspect, the second aspect, the third aspect or the fourth aspect or feasible examples in any aspect.

It should be understood that for implementations and beneficial effects of the foregoing plurality of aspects of this application, references may be made to each other.

### BRIEF DESCRIPTION OF THE DRAWINGS

Accompanying drawings used in embodiments of this application are described below.
FIG. 1 is diagram of an architecture of a communication system according to an embodiment of this application;
FIG. 2 is a diagram of a structure of a network device and a terminal device according to an embodiment of this application;
FIG. 3 is a diagram of a structure of a paging cycle according to an embodiment of this application;
FIG. 4 is a diagram of receiving a paging message by a terminal device according to an embodiment of this application;
FIG. 5 is a diagram of distribution of a PF within a paging cycle according to the prior art;
FIG. 6 is a diagram of distribution of a PF within a paging cycle according to an embodiment of this application;
FIG. 7, FIG. 8A, FIG. 8B, FIG. 9A, FIG. 9B, and FIG. 10 are schematic flowcharts of communication methods according to an embodiment of this application, respectively;
FIG. 11 is a diagram of a structure of a communication apparatus according to an embodiment of this application; and
FIG. 12 is a diagram a structure of another communication apparatus according to an embodiment of this application.

### DESCRIPTION OF EMBODIMENTS

The technical solutions in the embodiments of this application may be applied to various communication systems, for example, a long term evolution (long term evolution, LTE) system, a new radio technology (new radio, NR) system, an advanced long term evolution (LTE advanced, LTE-A) system, a device-to-device (device-to-device, D2D) communication system, a vehicle-to-everything (vehicle to everything, V2X) communication system, a machine-to-machine (machine-to-machine, M2M) communication system, an internet of things (internet of things, IoT), a narrowband internet of things (narrow band internet of things, NB-IoT), a perception communication integrated system, a frequency division duplexing (frequency division duplex, FDD) system, a time division duplexing (time division duplex, TDD system), a non-terrestrial communication (non-terrestrial communication, NTN) system, a wireless projection communication system, an integrated access and backhaul (integrated access and backhaul, IAB) communication system, a public land mobile network (public land mobile network, PLMN), a non-public network (Non-Public network, NPN), and a communication system (for example, a 6G communication system) that evolves after the 5G communication system or may be a non-3rd generation partnership project (3rd generation partnership project, 3GPP) communication system or the like, which is not limited.

To make the objectives, technical solutions, and advantages of this application clearer, embodiments of this application will be described below with reference to drawings in the embodiments of this application.

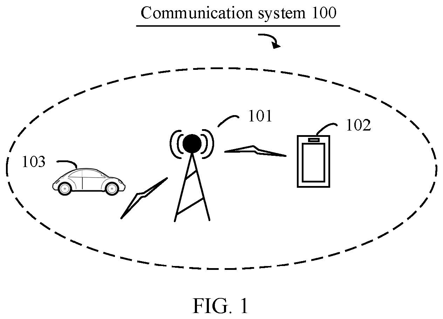

Refer to FIG. 1. FIG. 1 is a diagram of an architecture of a communication system according to an embodiment of this application. As shown in FIG. 1, the communication system 100 may include at least one network device (for example, a network device 101) and one or more terminal devices connected to the network device (for example, a terminal device 102 and a terminal device 103 connected to the network device 101). Optionally, different terminal devices may communicate with each other.

The terminal device involved in this application may be referred to as a terminal for short. The terminal is an entity on the user side that is used to receive or transmit signals, which may provide voices and/or data to the user. The terminal may also be referred to as a terminal (terminal) or user equipment (user equipment, UE), an access terminal, a UE unit, a UE station, a mobile device, a mobile station (mobile station), a mobile terminal, a mobile client, a mobile unit (mobile unit), a remote station, a remote terminal, a remote unit, a radio unit, a wireless communication device, a user agent, a user apparatus, or the like. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device, another processing device connected to a wireless modem, an in-vehicle device, a wearable device, a terminal in a future 5G network, a terminal in a future evolved PLMN, a terminal device in future NPN or the like. In the embodiments of this application, the chip applied to the above devices may also be referred to as a terminal.

In the embodiments of this application, the network device is a node or a device that accesses the terminal device to a wireless network, and may support wired access or wireless access. In some embodiments, the network device may be an access network (access network, AN) device or a radio access network (radio access network, RAN) device, which may be referred to as an access network for short, and is configured to provide an access service to the terminal, so that the terminal is accessed to (or visit) the network.

The access network may include, but is not limited to, an access point (access point, AP), an enhanced NodeB (enhance nodeB, eNB), a home evolved NodeB (for example, home evolved NodeB, or home Node B, HNB), a baseband unit (baseband unit, BBU), a next generation NodeB (NR nodeB, gNB), a transmission reception point (transmission reception point, TRP), a transmission point (transmission point, TP), or some other access node such as a wireless relay node and a wireless backhaul node. The AN/RAN node may be one or more formed antenna panels, or may be a network node forming a gNB or a transmission point, for example, a BBU or a distributed unit (distributed unit, DU) or may be a device that performs a RAN function in communication system such as D2D, V2X, M2M, or U2U. The AN/RAN node may be a radio controller in a cloud radio access network (cloud radio access network, CRAN) scenario, or may be an open access network (open RAN, O-RAN or ORAN) or may be an access network in a communication system evolved after the 5G communication system, for example, an xNodeB in a 6G communication system, or may be an access network in a PLMN network evolved after the 5G communication system, which is not limited herein.

In some embodiments, the network device and the terminal device may also be referred to as communication apparatuses, which may be a general-purpose device or a dedicated device. This is not specifically limited in the embodiments of this application.

The network device may communicate with the terminal device. For example, the system information of the communication system changes, and the network device 101 sends a paging message to the terminal device 102, so that the terminal device 102 obtains the changed system information.

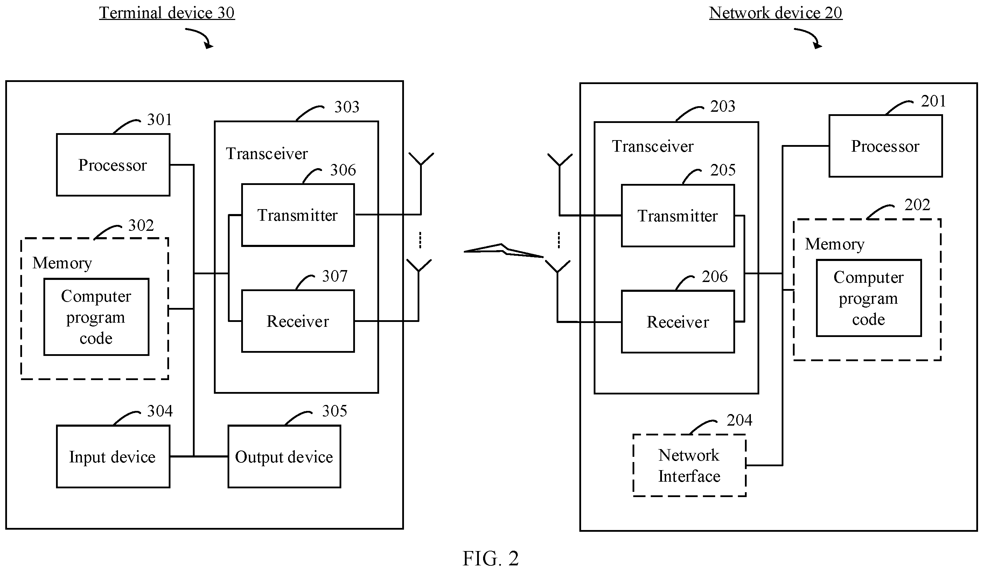

Refer to FIG. 2. FIG. 2 is a diagram of a structure of a network device and a terminal device according to an embodiment of this application. It may be understood that the network device 20 in FIG. 2 may be the network device 101 in the communication system 100 shown in FIG. 1, and the terminal device 30 may be the terminal device 102 or the terminal device 103 in the communication system 100 shown in FIG. 1.

As shown in FIG. 2, the terminal device 30 includes at least one processor 301 and at least one transceiver 303. Further, the terminal device 30 may further include at least one memory 302, at least one input device 304, and at least one output device 305. The processor 301, the memory 302, and the transceiver 303 are connected through a communication line. The communication line may include a channel and transfers information between the foregoing components.

The processor 301 may be a general purpose central processing unit (central processing unit, CPU), a microprocessor, a digital signal processor (digital signal processor, DSP), an application-specific integrated circuit (application specific integrated circuit, ASIC), a field programmable gate array (field programmable gate array, FPGA), or one or more integrated circuits configured to control program execution of this application solution. In a specific implementation, as an embodiment, the processor 301 may also include a plurality of CPUs, and the processor 301 may be a single-core (single-CPU) processor or a multi-core (multi-CPU) processor. The processor herein may be one or more devices, circuits, or processing cores for processing data (for example, computer program instructions).

The memory 302 may be an apparatus having a storage function. The memory may be, but is not limited to, a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CDROM) or another optical disc memory, a compact disc memory (including a compact disc, a laser disc, an optical disc, a digital versatile disc, a Blue ray disc, and the like), a magnetic disk storage medium or another magnetic storage device, or any other medium that can be used to carry or store desired program code in a form of instructions or data structures and that can be accessed by a computer, which is not limited herein. The memory 302 may exist independently, and is connected to the processor 301 through a communication line. The memory 302 may also be integrated with the processor 301.

The memory 302 is configured to store computer-executable instructions for executing the solutions in this application, and the processor 301 controls the execution. Specifically, the processor 301 is configured to execute the computer-executable instructions stored in the memory 302, so as to implement the method in the embodiments of this application.

Alternatively, in this application, the processor 301 may also perform functions related to processing in the method according to this application, and the transceiver 303 is responsible for communicating with other devices or communication networks. Embodiments of this application impose no specific limitation thereon.

The computer-executable instructions involved in this application may also be referred to as application program codes or computer program codes, which is not specifically limited in this embodiment of this application.

The transceiver 303 may be configured to communicate, by using any apparatus like a transceiver, with another device or a communication network, such as Ethernet, a radio access network (radio access network, RAN), or a wireless local area network (wireless local area networks, WLAN). The transceiver 303 includes a transmitter (transmitter, Tx) 306 and a receiver (receiver, Rx) 307.

The input device 304 communicates with the processor 301, and may display information in a plurality of manners. For example, the input device 304 may be a liquid crystal display (liquid crystal display, LCD), a light emitting diode (light emitting diode, LED) display device, a cathode ray tube (cathode ray tube, CRT) display device, or a projector (projector).

The output device 305 communicates with the processor 301, and may receive an input from a user in a plurality of manners. For example, the output device 305 may be a mouse, a keyboard, a touchscreen device, or a sensor device.

The network device 20 includes at least one processor 201 and at least one transceiver 203. Further, the network device 20 may further include at least one memory 202 and at least one network interface 204. The processor 201, the memory 202, the transceiver 203, and the network interface 204 are connected through a communication line. The network interface 204 is configured to be connected to a core network device through a link (for example, an S1 interface), or connected to a network interface of another network device through a wired or wireless link (for example, an X2 interface) (not shown in FIG. 2). The embodiments of this application impose no specific limitation thereon. The transceiver 203 may include: a transmitter 205 and a receiver 206. In addition, descriptions about the processor 201, the memory 202, and the transceiver 203 refer to descriptions about the processor 301, the memory 302, and the transceiver 303 in the terminal device 30. Details are not described again herein.

It may be understood that the structure shown in FIG. 2 constitutes no specific limitation on the terminal device 30 and the network device 20. For example, in some other embodiments of this application, the terminal device 30 and the network device 20 may include more or fewer components than those shown in the figure, or some components may be combined, some components may be split, or the components may be differently arranged. The components shown in the figure may be implemented by hardware, software, or a combination of software and hardware.

The following first provides definitions of technical terms that may appear in the embodiments of this application, and briefly describes a paging procedure and reception of a paging message. Terms used in implementations of this application are merely intended to explain specific embodiments of this application, instead of limiting this application.
(1) System information is cell-level information periodically broadcast by a network device on a broadcast control channel (broadcast control channel, BCCH). After searching for a cell and completing downlink synchronization with the cell, the terminal device needs to obtain the system information of the cell, to help access the cell and work properly in the cell.

Currently, the system message of 5G NR includes a master information block (master information block, MIB) and a plurality of system information blocks (system information blocks, SIB). Currently, the SIB includes 14 types of system information blocks (SIB1-SIB14), and more SIBs may be introduced in the future. The MIB includes some necessary physical layer information. For example, the MIB may include a system frame number (system frame number, SFN), which is carried by a systemFrameNumber field, and is used for synchronization between the terminal device and the network side.

It should be noted that this application lists only information related to this application included in the MIB. Actually, the MIB may further include other information, for example, a subcarrier spacing, a subcarrier offset, a demodulation reference signal (demodulation reference signal, DMRS) location information, and the like, which may refer to related descriptions in the standard. Details are not described herein again.

(2) Paging (paging), configured to notify a terminal device in an idle (idle) state or an inactive (inactive) state to set up a called service, or notify the terminal device that the system information of the communication system changes, and the terminal device needs to read the changed system broadcast message again or the terminal device is notified to receive the earthquake and tsunami warning system (earthquake and tsunami warning system, ETWS) information.

The terminal device may periodically receive the paging message, and the cycle is referred to as a paging cycle (paging cycle). Optionally, when the DRX technology is used, the paging cycle may be a DRX cycle (DRX cycle of the UE), for example, 1.28s or 2.56s of the terminal device. That is, the terminal device is woken up when the DRX cycle arrives, and is configured to obtain the paging message.

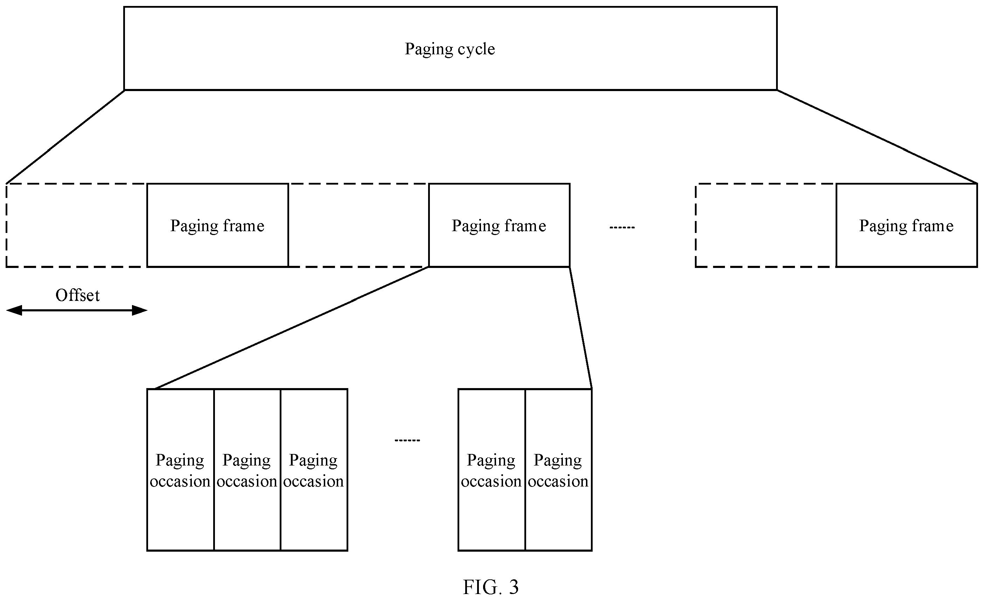

A specific moment at which the terminal device receives the paging message is referred to as a paging occasion (paging occasion, PO), which is determined by the network device and configured for the terminal device. For example, refer to FIG. 3. FIG. 3 is a diagram of a structure of a paging cycle according to this application. As shown in FIG. 3, a paging cycle may include a plurality of paging frames (paging frame, PF), and each paging frame includes a plurality of paging occasions (paging occasion, PO). Each PO corresponds to one SFN, and one PO corresponds to one or more terminal devices. That is, a paging message transmitted in one PO may take effect on one or more terminal devices. Optionally, each PF may further have an offset (offset).

Optionally, each PF corresponds to a plurality of synchronization signal/ physical broadcast channel blocks (synchronization signal/physical broadcast channel block, SSB) respectively.

The paging message is a type of downlink control information (downlink control information, DCI), and may be DCI scrambled by using a paging wireless network temporary identifier (paging radio network temporary identity, P-RNTI). The paging message is a radio resource control (radio resource control, RRC) message carried on a physical downlink shared channel (physical downlink shared channel, PDSCH), and is configured to send a call request to the terminal device in the RRC idle state, to notify the terminal device to enter random access.

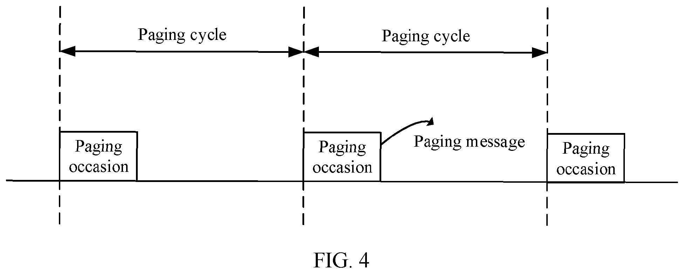

The procedure for the terminal device to receive the paging message is as follows: calculating the locations PO and PF where paging messages may be transmitted; and detecting the paging messages based on PO and PF. For example, refer to FIG. 4. FIG. 4 is a diagram of receiving a paging message by a terminal device according to this application. In FIG. 4, the terminal device obtains the paging occasion according to the paging cycle. At the first paging occasion in FIG. 4, the terminal device obtains no P-RNTI scrambled DCI. The terminal device continues to obtain, and at the second paging occasion in FIG. 4, the terminal device obtains the P-RNTI scrambled DCI, and receives the paging message scheduled by the DCI.

Currently, a method for determining the PF refers to the following formula (1), and a method for determining the PO refers to the following formula (2). $\left(SFN+PF_offset\right) mod T = \left(T div N\right) * \left(UE_ID mod N\right)$ (1) $i _ s = floor \left(UE_ID/N\right) mod Ns$ (2) where SFN is a system frame number, whose value range is 0-1023. T is the paging cycle (for example, the DRX cycle) of the terminal device, which is a constant, such as 32, 64, 128, or 256, with a unit of ms. N is the quantity of PFs in T. Ns is the quantity of POs in the PF, and PF_offset is the offset of the PF. UE_ID represents the identifier of the terminal device, and i_s indicates that the PO is a previous PO of a specific PO in the PF. In other words, i_s+1 indicates that the PO for sending the paging message of the terminal device is the sequence number of the PO in the PF.

This application imposes no limitation on the identifier of the terminal device. The identifier of the terminal device may be a UE-level identifier, for example, an international mobile subscriber identity (international mobile subscriber identification number, IMSI), an international mobile equipment identity (international mobile equipment identity, IMEI), or a temporary mobile subscriber identity (system architecture evolution temporary mobile station identity, S-TMSI), or may be a cell-level or group-level identifier, such as a cell-radio network temporary identity (cell-radio network temporary identity, C-RNTI).

Optionally, a numerical value corresponding to the identifier of the terminal device may be a modulus value between the identifier of the terminal device and a first threshold. The first threshold may be 1024 or 4096. For example, UE_ID=IMSI mod 1024. It may be known from the above formula that for a terminal device, the SFN of the paging message received by the terminal device may be known by obtaining the PF through calculation, and then i_s is obtained through calculation. It may be known that the PO of the terminal device is the (i_s+1)^{th} PO in the PF. In addition, it may be known from the above formula that when configuring the time-frequency resource, the network device evenly allocates frames with different SFN numbers and frames with PF offsets to the T system frames, and evenly allocates the N PFs to the T system frames. In addition, the network device allocates terminal devices with different UE_ID evenly to the N PFs. In other words, the PFs are evenly distributed to the cycle T, and the network device sends the paging message of each terminal device by using an evenly distributed time domain resource.

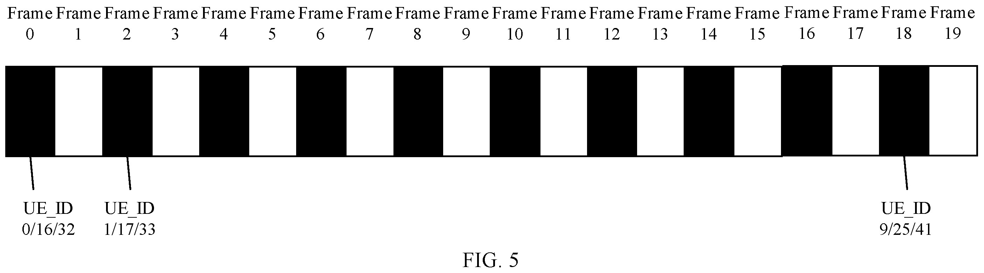

For example, refer FIG. 5. FIG. 5 is a distribution diagram of PF within a paging cycle according to the prior art. As shown in FIG. 5, black squares represent paging frames. It may be seen that in a paging cycle, 10 paging frames are evenly distributed. The frame number of the paging frame for a terminal device with a UE_ID of 0/16/32 is 0, the frame number of the paging frame for a terminal device with a UE_ID of 1/17/33 is 2, and the frame number of the paging frame for a terminal device with a UE_ID of 9/25/41 is 18.

However, a transmission occasion of the paging message of each terminal device is random, and the network device may need to send the paging message at any time. As a result, the network device cannot perform deep sleep, and an energy saving effect of the network device cannot be improved.

Based on this, this application provides a communication method. A paging window is determined within a paging cycle. The paging window includes a paging frame configured for each terminal device. In this case, the network device may send a paging message to a terminal device by using a paging frame within a paging window, instead of sending the paging message by using a system frame outside the paging window within a paging cycle, which can reduce power consumption of the network device.

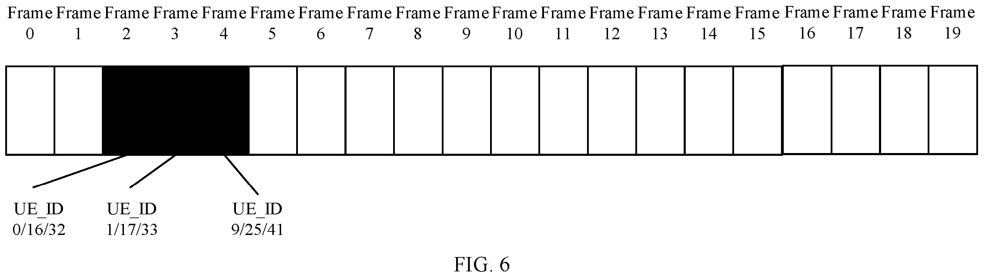

For example, refer to FIG. 6. FIG. 6 is a distribution diagram of PF within a paging cycle according to an embodiment of this application. As shown in FIG. 6, black squares represent paging frames. It may be seen that in a paging cycle, three paging frames are distributed in a centralized manner. In addition, the frame number of the paging frame for a terminal device with a UE_ID of 0/16/32 is 2, the frame number of the paging frame for a terminal device with a UE_ID of 1/17/33 is 3, and the frame number of the paging frame for a terminal device with a UE_ID of 9/25/41 is 4. In this way, compared with the paging frames in evenly dispersed distribution shown in FIG. 5, in FIG. 6, paging frames are centrally distributed within a paging cycle, so that a time of deep sleep of the network device can be increased, and power consumption can be reduced.

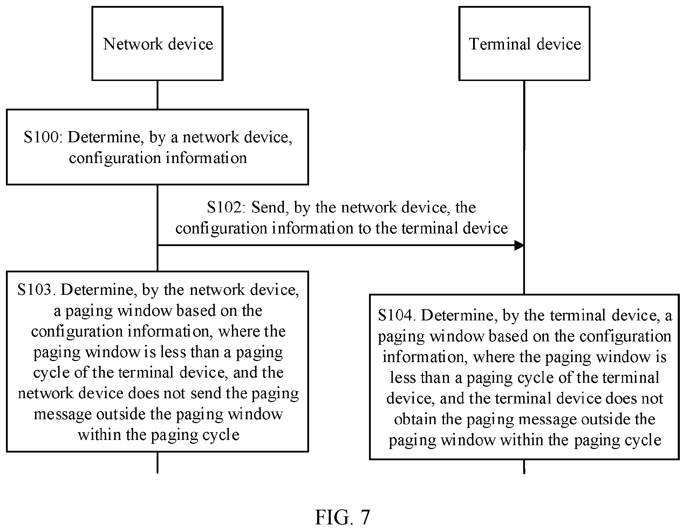

The following describes the communication method according to an embodiment of this application. Refer to FIG. 7 first. FIG. 7 is a schematic flowchart of a communication method according to an embodiment of this application. A communication apparatus involved in the communication method may refer to descriptions in FIG. 1 and FIG. 2. As shown in FIG. 7, the communication method includes the following steps:
S100: A network device determines configuration information.
S102: The network device sends the configuration information to a terminal device.

Correspondingly, the terminal device receives the configuration information from the network device.

The configuration information is configured to determine a paging window. This application imposes no limitation on the quantity of paging windows, and may include at least one paging window within one paging cycle.

For example, one paging window includes N1 PFs, and each PF in the N1 PFs includes a plurality of system subframes (for example, POs). N1 may be equal to or different from the quantity of PFs (for example, N in formula (1) in a paging cycle defined in the prior art. The quantity of POs in each PF may also be equal to or different from a value (for example, Ns in formula (2) defined in the prior art. It should be understood that the quantity of paging frames in the paging window, the offset of the paging frame, and the quantity of paging occasions in the paging frame may be carried in the configuration information in step S102, or may be sent by using other system information or other information, or may be predefined information.

This application imposes no limitation on the type of the configuration information, and the configuration information may include at least one of the following: system information, radio resource control (radio resource control, RRC) information, medium access control control element (media access control element, MAC CE) information, and downlink control information (downlink control information, DCI). The configuration information in step S102 may be understood as indication information indicating that a paging window is newly added. In this way, the terminal device may determine attribute information of the paging window based on the configuration information newly configured by the network device, and determine a transmission occasion configured for the paging message of the terminal device in the paging window, so as to obtain the paging message of the terminal device based on the transmission occasion.

In some feasible examples, step S100 may include: obtaining, by a network device, a preconfigured N1 set of configurations; and determining, by the network device, the configuration information from the N1 sets of configurations by using a common group physical downlink control channel (Group common PDCCH).

N1 is the quantity of paging frames in the paging window. Each configuration in the N1 sets of configurations is configured to determine information such as locations and sizes of different paging windows, and locations of paging frames of the terminal device in the paging window. It may be understood that N1 sets of different configurations are preconfigured, and attribute information of each set of paging windows is different, thereby improving configuration flexibility. The network device determines a configuration used for this paging through using the common group physical downlink control channel, that is, indicates a specific configuration from the N1 sets of configurations as the configuration information, so that a configured rate may be increased.

This application imposes no limitation on the content of the configuration information. Optionally, the configuration information may include the following four feasible manners.

A first feasible manner: The configuration information includes a size of a paging window, and a start location of the paging window is a predefined location.

The size of the paging window may be represented by a value of a time domain resource. This application imposes no limitation on a unit of the time domain resource, and the unit may include a superframe, a radio frame (frame) (frame for short), a subframe (subframe), a slot (slot), a sub-slot (sub-slot), a symbol (symbol), and the like. For example, the size of the paging window is 20 slots.

Alternatively, the size of the paging window may be represented by the quantity M of time domain resource granularities, that is, the size of the paging window is represented by using the quantity of time domain resource granularities in the configuration information. The time domain resource granularity may be the above superframe, frame, slot, sub-slot, symbol, or the like. In this embodiment of this application, the size of the paging window may be represented by the quantity of system frames included in the paging window. For example, when the subcarrier spacing is 15 kHz, one frame is equal to 10 slots, that is, the time domain resource granularity is 10. If the size of the paging window is 20 slots, M is 2.

Optionally, the predefined location of the start location of the paging window may be the start location of the paging cycle. Further, the start location of the paging window may be a start location of a discontinuous reception cycle. That is, the start point of the paging window is fixed at the start point of the paging cycle or the start point of the discontinuous reception cycle.

It may be understood that, in the first feasible manner, the start location of the paging window is fixed, and the configuration information includes the size of the paging window, so that the end location of the paging window may be determined based on the start location and the size of the paging window.

A second feasible manner: The configuration information includes the start location and size of the paging window.

A third feasible manner: The configuration information includes the start location and the end location of the paging window.

The start location of the paging window may be indicated by using a bitmap. This application imposes no limitation on the representation manner of the bitmap. A numerical value corresponding to each bit in the bitmap is used to indicate whether the bit is the start location of the paging window. For example, 1 may be used to indicate the start location of the paging window, and 0 is used to indicate that the start location of the paging window is not.

The quantity of bits of the bitmap may be determined by a quotient between a total quantity of system frames within the paging cycle and an indication time domain resource granularity. For example, the quantity of bits of the bitmap is equal to an integer that indicates a quotient between the total quantity of system frames with the paging cycle and the time domain resource granularity. The indicated time domain resource granularity is a difference between system frame numbers corresponding to two adjacent bits in the bitmap. For example, when the total quantity of system frames within the paging cycle is 100 frames, and the time domain resource granularity indicated is 10, the bit quantity of the bitmap may be 10. The system frame numbers corresponding to the bits in the bitmap are 0, 10, 20, 30, 40, 50, 60, 70, 80, and 90. If the time domain resource granularity is 1, the quantity of bits of the bitmap is equal to the total quantity of system frames within the paging cycle, that is, one bit corresponds to one system frame, and the system frame numbers corresponding to the bits in the bitmap are 0 to 99. It may be understood that when the indicated time domain resource granularity is 1, the quantity of bits of the bitmap is equal to the total quantity of system frames within the paging cycle, thereby improving indication accuracy, but a large quantity of resources need to be occupied to indicate the start location of the paging window. When the time domain resource granularity is greater than 1, occupied resources may be reduced.

The start location of the paging window may be indicated by using an offset of the start location of the paging cycle. The offset of the start location of the paging cycle may be represented by the quantity of time domain resources at an interval between the start location of the paging window and the start location of the paging cycle, for example, 20 slots. Alternatively, the offset may be represented by the quantity of time domain resource granularities. For example, when the unit of the offset is a frame and the unit of the time domain resource is a slot, if one frame is equal to 10 slots, the offset is 2.

It may be understood that after the configuration information includes the start location and the size of the paging window, the end location of the paging window may be determined based on the start location and the size of the paging window, so as to determine the location of the paging window. If the configuration information includes the start location and the end location of the paging window, the size of the paging window may be determined based on the start location and the end location of the paging window. In other words, the size of the paging window is implicitly shown in the third feasible manner.

The foregoing forms of the start location of the paging window are merely examples. Actually, other forms may also be included. Similarly, the end location of the paging window may also be indicated in the foregoing two manners, and details are not described herein again.

A fourth feasible manner: The configuration information includes an aggregation factor.

The aggregation factor may be represented by using a character X, and X may be an integer greater than 1. The aggregation factor is used to concentrate scattered paging messages configured by different terminal devices in an area of the paging cycle, and the area may be referred to as the paging window.

It may be understood that after the configuration information includes the aggregation factor, paging frames that are originally distributed in a decentralized manner may be concentrated in the area of the paging cycle according to the aggregation factor. In this way, the paging window is less than the paging cycle of the terminal device. If paging frames of different terminal devices are configured in the paging window, the network device may send a paging message to the terminal device by using the paging frame in the paging window, and does not use a system frame other than the paging window within the paging cycle, which can reduce power consumption of the network device.

It should be noted that the foregoing four feasible manners are examples of this application. In fact, there may be other information in the configuration information. For example, the configuration information may further include at least one of the following: the quantity of paging frames in the paging window, the offset of the paging frame, the quantity of paging occasions in the paging frame, and the like. If the quantity and offset of paging frames in the paging window and the quantity of paging occasions in the paging frame are not included, the quantity of paging frames within the paging cycle may be used as the quantity of paging frames in the paging window or another default value. The offset of the paging frame within the paging cycle is used as the offset of the paging frame in the paging window or set to 0, and the quantity of paging occasions in the paging frame with the paging cycle is used as the quantity of paging occasions in the paging frame in the paging window or another default value.

S103. The network device determines the paging window based on the configuration information, where the paging window is less than the paging cycle of the terminal device, and the network device does not send a paging message outside the paging window within the paging cycle.

S104. The terminal device determines the paging window based on the configuration information, where the paging window is less than the paging cycle of the terminal device, and the terminal device does not obtain a paging message outside the paging window within the paging cycle.

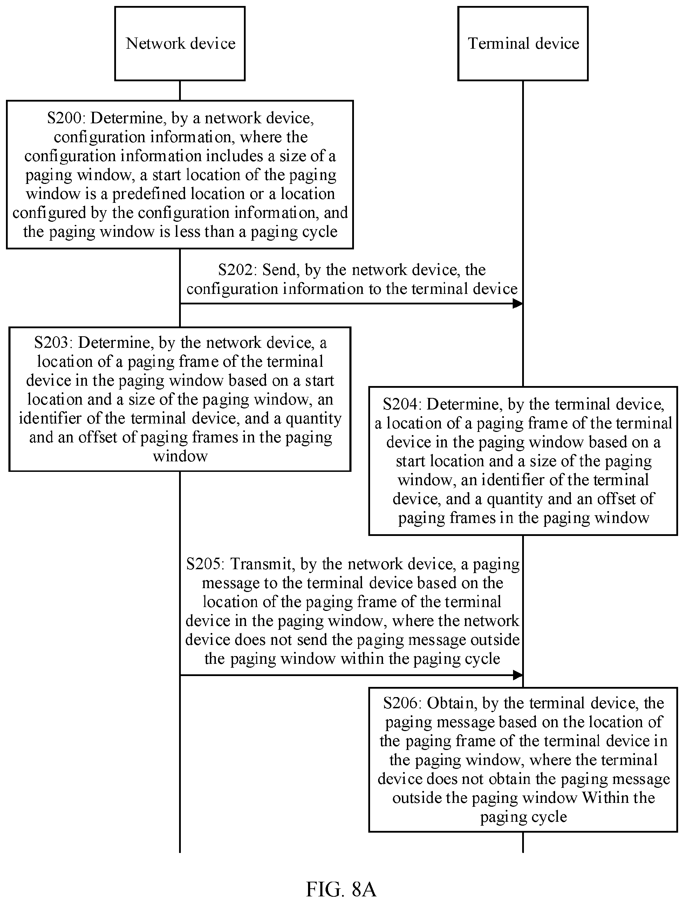

It should be understood that the network device may determine the paging window based on the configuration information, so that when the paging event of the terminal device (for example, a called event is created, the system information of the communication system is changed, or the terminal device needs to be notified to receive the ETWS information) occurs, the network device may send the paging message of the terminal device based on the paging window. Correspondingly, the terminal device may determine the paging window based on the configuration information, so that when the paging cycle arrives, the terminal device obtains (or detects) the paging message of the terminal device based on the paging window. Methods for determining the paging window by the network device and the terminal device may be the same. This specification uses the terminal device as an example for description, which may specifically refer to embodiments shown in FIG. 8A, FIG. 8B, FIG. 9A, FIG. 9B, and FIG. 10.

In the method shown in FIG. 7, the paging window is less than the paging cycle. In this way, the network device sends the paging message to the terminal device based on the paging window, and does not send the paging message by using the time domain resource other than the paging window within the paging cycle. The network device does not need to wait at any time to send the paging message, so that the network device may enter deep sleep in a time period outside the paging window within the paging cycle, thereby reducing power consumption of the network device.

It should be noted that, in FIG. 7, step S103 is performed before step S104. Actually, step S103 and step S104 may be performed at the same time, or step S103 may be performed after step S104. Optionally, step S103 is performed after it is determined that the paging event of the terminal device occurs, or step S103 is performed after step S100.

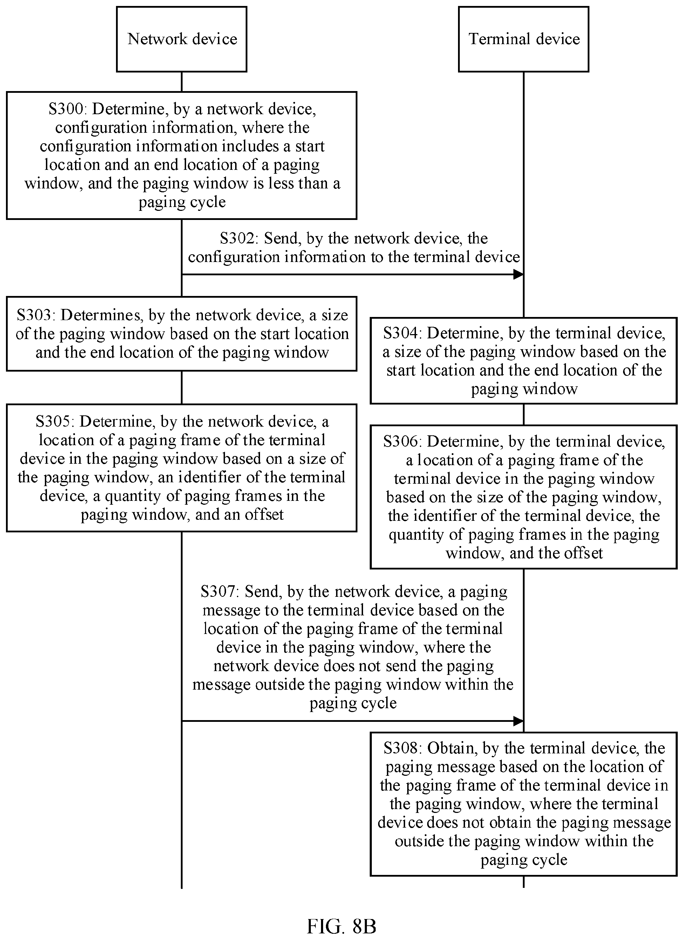

The following describes in detail how to determine the paging window based on the configuration information. The location and the size of the paging window are directly obtained from the configuration information, or determined by using the configuration information with reference to descriptions in the foregoing four feasible manners. Details are not described herein again. Locations of paging frames of the terminal device in the paging window refer to the communication methods shown in FIG. 8A and FIG. 8B respectively. Configuration information in FIG. 8A is the foregoing first feasible manner or the second feasible manner. The configuration information in FIG. 8B is the foregoing third feasible manner. As shown in FIG. 8A, the method includes:

S200. A network device determines configuration information, where the configuration information includes a size of a paging window, a start location of the paging window is a predefined location or a location configured by the configuration information, and the paging window is smaller than a paging cycle.

S202: The network device sends the configuration information to a terminal device.

Correspondingly, the terminal device receives the configuration information from the network device.

Steps S200 and S202 may refer to the description of FIG. 7. Details are not described herein again.

S203. The network device determines a location of a paging frame of the terminal device in the paging window based on a start location and a size of the paging window, an identifier of the terminal device, and a quantity and an offset of paging frames in the paging window.

S204. The terminal device determines the location of the paging frame of the terminal device in the paging window based on the start location and the size of the paging window, the identifier of the terminal device, and the quantity and the offset of paging frames in the paging window.

The location of the paging frame of the terminal device in the paging window may be determined by using a system frame number corresponding to the paging frame in the paging window. This application imposes no limitation on a method for determining a location of a paging frame of a terminal device in a paging window. The following uses a terminal device as an example for description.

In some feasible examples, step S204 may include: determining, by the terminal device, a location of each paging frame in the paging window according to a start location and a size of the paging window and a quantity of paging frames in the paging window, where the terminal device determines the location of the paging frame of the terminal device in the paging window according to the identifier of the terminal device, the quantity of paging frames in the paging window, and the location and offset of each paging frame in the paging window.

The quantity and the offset of the paging frames in the paging window may be included in the configuration information, or may be obtained from predetermined information or other information. If the quantity of paging frames in the paging window is not obtained, the quantity of paging frames within the paging cycle may be used as the quantity of paging frames in the paging window. If the offset of the paging frame in the paging window is not obtained, the offset of the paging frame within the paging cycle may be used as the offset of the paging frame in the paging window, or may be set to 0.

Each paging frame in the paging window may be evenly distributed. The paging frame of the terminal device may be an R^{th} paging frame in the paging window, and R may be equal to a modulus value between the identifier of the terminal device and the quantity of paging frames in the paging window or may be equal to a difference, a minimum value, or the like between a hash value corresponding to the identifier of the terminal device and the quantity of paging frames in the paging window. This is not limited herein.

It may be understood that the location of each paging frame in the paging window is determined based on the size of the paging window and the quantity of paging frames in the paging window. Then, the location of the paging frame of the terminal device in the paging window is determined based on the identifier of the terminal device, the quantity of paging frames in the paging window, and the location and offset of each paging frame in the paging window, so that different terminal devices are distributed in different paging frames.

Optionally, terminal devices are evenly distributed in different paging frames, so as to avoid that a single paging frame is configured to send paging messages of a plurality of terminal devices.

Step S203 may alternatively be that the network device determines the location of the paging frame of the terminal device in the paging window based on the size of the paging window, the identifier of the terminal device, the quantity of paging frames in the paging window, and the offset. Correspondingly, step S204 may alternatively be that the terminal device determines the location of the paging frame of the terminal device in the paging window based on the size of the paging window, the identifier of the terminal device, the quantity of paging frames in the paging window, and the offset.

Step S203 or S204 may alternatively be implemented based on the following three optional formulas, where:
a first optional formula: $\left(SFN+PF_offset\right) mod M = \left(M div N1\right) * \left(UE_ID mod N1\right)$ (3), where
M represents the size of the paging window, N1 represents the quantity of paging frames in the paging window, and SFN, PF_offset and UE_ID are as defined above. System frames within a paging window shall be confined within that paging window. The location of the system frame in the paging window should be determined by the start location of the paging window and the size of the paging window. An expression formula thereof is as follows: ${SFN}_{Tstart} < = SFN < = {SFN}_{Tstart} + M$ (4)

It may be understood that formula (3) is based on formula (1), T in formula (1) is replaced with M, and N is replaced with N1. This means that a paging cycle is shortened, a deep sleep time of the network device is increased, and power consumption can be reduced.

A second optional formula: $\left(SFN+PF_offset\right) mod M = \left(M div N\right) * \left(UE_ID mod N\right)$ (5) where SFN, PF_offset, UE_ID, M, and N may be as defined above, and SFN meets the above formula (4). It should be noted that N represents the quantity of paging frames within the paging cycle, but N is equal to the quantity of paging frames, that is, N1 in formula (3). It may be understood that formula (5) introduces only a new parameter M based on formula (1), and changes a value of N to the quantity of paging frames.

A third optional formula: $\left(SFN+PF_offset1\right) mod M = \left(M div N1\right) * \left(UE_ID mod N1\right)$ (6) where PF_offset1 is the offset of the paging frame, SFN, UE_ID, M, and N1 are as defined above, and SFN meets the above formula (4). PF_offset1 may be understood as an updated value of PF_offset in formula (5). It should be understood that in formula (3), formula (5), or formula (6), the value of the offset of the paging frame may be equal to or different from the offset configured for the paging frame in the prior art.

It should be understood that paging frames of paging messages of different terminal devices are evenly distributed in paging windows by using any one of the above three formulas. It should be noted that the above three formulas are merely examples. Actually, another formula may be further included, for example, a formula (7) shown below. $\left(SFN+PF_offset1\right) mod M = \left(M div N\right) * \left(UE_ID mod N\right)$ (7)

It should be noted that step S203 in FIG. 8A is performed before step S204. Actually, step S203 and step S204 may be performed at the same time, or step S203 may be performed after step S204. Optionally, step S203 is performed after it is determined that the paging event of the terminal device occurs, or step S203 is performed after step S200.

S205. The network device sends the paging message to the terminal device based on the location of the paging frame of the terminal device in the paging window, and the network device does not send the paging message outside the paging window within the paging cycle.

S206. The terminal device obtains the paging message based on the location of the paging frame of the terminal device in the paging window, and the terminal device obtains no paging message outside the paging window within the paging cycle.

Referring again to FIG. 8B, the method shown in FIG. 8B includes:
S300. A network device determines configuration information, where the configuration information includes a start location and an end location of a paging window, and the paging window is smaller than a paging cycle.
S302: The network device sends the configuration information to a terminal device.

Correspondingly, the terminal device receives the configuration information from the network device.

Steps S300 and S302 may refer to the description of FIG. 7, and are not described again herein for brevity.

S303. The network device determines a size of the paging window based on the start location and the end location of the paging window.

S304. The terminal device determines a size of the paging window based on the start location and the end location of the paging window.

The size of the paging window may be determined by using a time domain resource between a start location and an end location of the paging window. For example, if a system frame number corresponding to an end location of the paging window is 18, and a system frame number corresponding to a start location of the paging window is 2, a size of the paging window is 16 frames.

S305. The network device determines a location of a paging frame of the terminal device in the paging window based on a size of the paging window, an identifier of the terminal device, a quantity of paging frames in the paging window, and an offset.

S306. The terminal device determines a location of a paging frame of the terminal device in the paging window based on the size of the paging window, the identifier of the terminal device, the quantity of paging frames in the paging window, and the offset.

Steps S305 and S306 may refer to the description of Step S204, and are not described again herein for brevity.

Step S305 may alternatively be that the network device determines the location of the paging frame of the terminal device in the paging window based on the start location and the size of the paging window, the identifier of the terminal device, the quantity of paging frames in the paging window, and the offset. Correspondingly, step S306 may alternatively be that the terminal device determines a location of the paging frame of the terminal device in the paging window based on a start location and a size of the paging window, an identifier of the terminal device, a quantity of paging frames in the paging window, and an offset.

It should be noted that step S303 in FIG. 8B is performed before step S304, and step S305 is performed before step S306. Actually, step S303 may be performed simultaneously with step S304, or step 303 is performed after step S304. Optionally, step S303 is performed after it is determined that the paging event of the terminal device occurs, and step S305 is performed after step S303. Alternatively, step S303 is performed after step S300, and step S305 is performed after step S303.

S307. The network device sends the paging message to the terminal device based on the location of the paging frame of the terminal device in the paging window, and the network device does not send the paging message outside the paging window within the paging cycle.

S308. The terminal device obtains the paging message based on the location of the paging frame of the terminal device in the paging window, and the terminal device obtains no paging message outside the paging window within the paging cycle.

It may be understood that, in the method shown in FIG. 8A or FIG. 8B, the paging window is less than the paging cycle. In this way, the network device sends the paging message to the terminal device based on the paging window, and does not send the paging message by using a time domain resource other than the paging window within the paging cycle, which can reduce power consumption of the network device. In addition, the network device may determine a size and a location of the paging window and a location of the paging frame of the terminal device in the paging window based on the configuration information. Therefore, when a paging event of the terminal device occurs, the network device may send the paging message of the terminal device based on the location of the paging frame. Correspondingly, the terminal device may determine a size and a location of the paging window and a location of the paging frame of the terminal device in the paging window based on the configuration information, so that when a paging cycle arrives, the paging message of the terminal device is obtained based on the location of the paging frame.

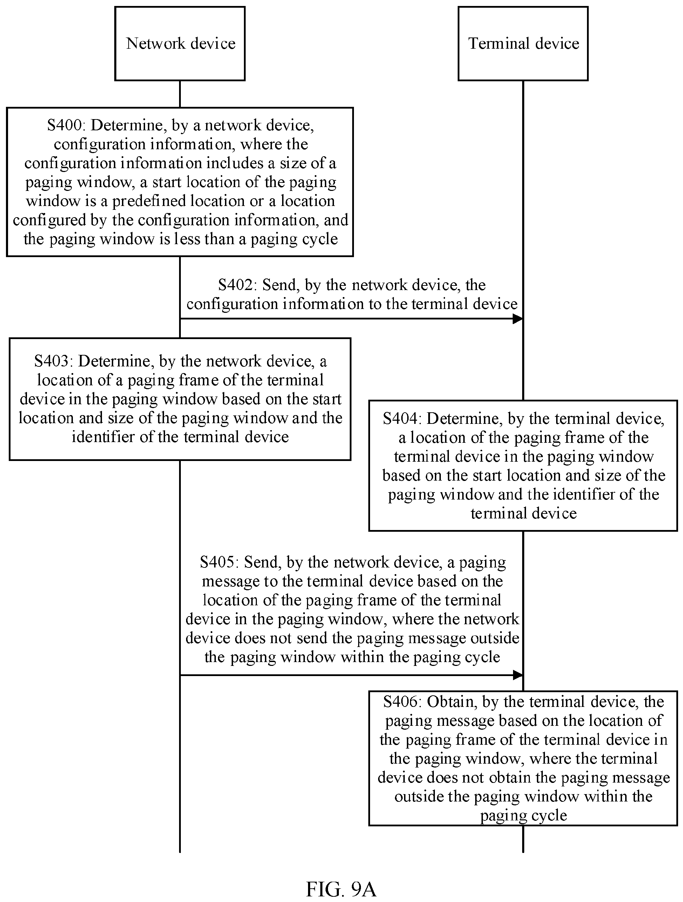

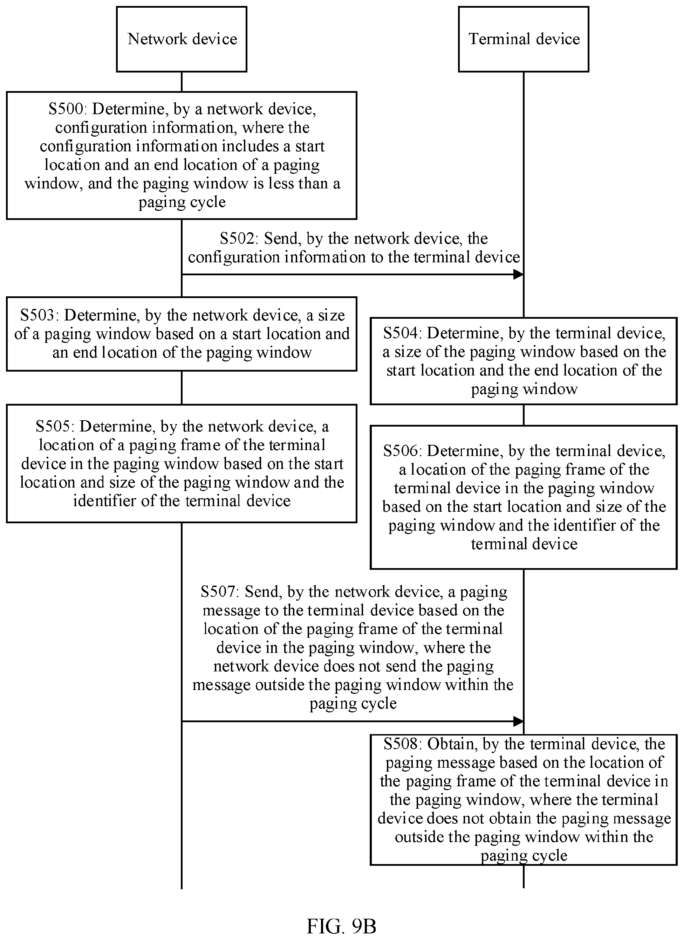

A method for determining a location of a paging frame of a terminal device in a paging window may alternatively refer to the communication method shown in FIG. 9A or FIG. 9B. The configuration information in FIG. 9A is the above first feasible manner or the above second feasible manner, and the configuration information in FIG. 9B is the above third feasible manner. As shown in FIG. 9A, the communication method includes:
S400. A network device determines configuration information, where the configuration information includes a size of a paging window, a start location of the paging window is a predefined location or a location configured by the configuration information, and the paging window is smaller than a paging cycle.
S402: The network device sends the configuration information to a terminal device.

Correspondingly, the terminal device receives the configuration information from the network device.

S400 to S402 may refer to the description of FIG. 7. Details are not described herein again.

S403. The network device determines a location of the paging frame of the terminal device in the paging window based on the start location and size of the paging window and the identifier of the terminal device.

S404. The terminal device determines a location of the paging frame of the terminal device in the paging window based on the start location and size of the paging window and the identifier of the terminal device.

This application imposes no limitation on a method for determining the location of the paging frame of the terminal device in the paging window. Such a determining manner in step S403 and step S404 is irrelevant to the quantity of paging frames in the paging window. Specifically, R may be first determined based on the size of the paging window and the identifier of the terminal device, and then the location of the paging frame of the terminal device in the paging window is determined based on the start location of the paging window and R. R may refer to the description of FIG. 8A. Details are not described herein again.

It may be understood that after the sequence of the paging frames of the terminal device in the paging window is determined, the location of the paging frame of the terminal device in the paging window may be determined based on the system frame number and R corresponding to the start location of the paging window.

Step S403 and step S404 may be implemented according to the following formula (8). $SFN = PW_start + UE_ID mod M$ (8) where PW_start is a start location of the paging window. SFN, M, and UE_ID may be as defined above. The value obtained from UE_ID mod M is R as described above. In addition, SFN in formula (8) may meet the above formula (4).

It may be understood that for paging frames of different terminal devices in the paging window determined by using formula (8), originally uniformly distributed paging frames are centrally and evenly distributed in the paging window, and different terminal devices are evenly allocated to the paging frames in the paging window, which prevents terminal devices from being concentrated in a same paging frame.

It should be noted that, formula (8) is merely an example. In fact, there may be other determining formulas, such as formula (9): $SFN = PW_start + Hash \left(UE_ID, M\right)$ (9) where PW_start, SFN, M, and UE_ID may be as defined above. Hash (UE_ID, M) indicates that the hash operation is performed on UE_ID and M. In other cases, another formula may also exist. For example, the hash function may include other parameters in addition to UE_ID and M. Alternatively, the hash function includes the UE_ID, and after a hash operation is performed on the UE_ID, modulo operation is performed on M. This is not limited herein.

Step S403 in FIG. 9A is performed before step S404. Actually, step S403 and step S404 may be performed at the same time, or step S403 may be performed after step S404. Optionally, step S403 is performed after it is determined that the paging event of the terminal device occurs, or step S403 is performed after step S400.

S405. The network device sends the paging message to the terminal device based on the location of the paging frame of the terminal device in the paging window, and the network device does not send the paging message outside the paging window within the paging cycle.

S406. The terminal device obtains the paging message based on the location of the paging frame of the terminal device in the paging window, and the terminal device obtains no paging message outside the paging window within the paging cycle.

Referring again to FIG. 9B, the method shown in FIG. 9B includes:
S500. A network device determines configuration information, where the configuration information includes a start location and an end location of a paging window, and the paging window is smaller than a paging cycle.
S502: The network device sends the configuration information to a terminal device.

Correspondingly, the terminal device receives the configuration information from the network device.

S503. The network device determines a size of the paging window based on the start location and the end location of the paging window.

S504. The terminal device determines a size of the paging window based on the start location and the end location of the paging window.

S505. The network device determines a location of the paging frame of the terminal device in the paging window based on the start location and size of the paging window and the identifier of the terminal device.

S506. The terminal device determines a location of the paging frame of the terminal device in the paging window based on the start location and size of the paging window and the identifier of the terminal device.

Steps S500 to S506 may refer to the above description, and details are omitted herein.

It should be noted that step S503 in FIG. 9B is performed before step S504, and step S505 is performed before step S506. In fact, step S503 may be performed simultaneously with step S504, or step S503 is performed after step S504. Optionally, step S503 is performed after it is determined that the paging event of the terminal device occurs, and step S505 is performed after step S503. Alternatively, step S503 is performed after step S500, and step S505 is performed after step S503.

S507. The network device sends the paging message to the terminal device based on the location of the paging frame of the terminal device in the paging window, and the network device does not send the paging message outside the paging window within the paging cycle.

S508. The terminal device obtains the paging message based on the location of the paging frame of the terminal device in the paging window, and the terminal device obtains no paging message outside the paging window within the paging cycle.

It may be understood that, in the method shown in FIG. 9A or FIG. 9B, the paging window is less than the paging cycle. In this way, the network device sends the paging message to the terminal device based on the paging window, and does not send the paging message by using a time domain resource other than the paging window within the paging cycle, which can reduce power consumption of the network device. In addition, the network device may determine the size and the start location of the paging window, and the location of the paging frame of the terminal device in the paging window based on the configuration information. Therefore, when a paging event of the terminal device occurs, the network device may send the paging message of the terminal device based on the location of the paging frame. Correspondingly, the terminal device may determine the size and the start location of the paging window, and the location of the paging frame of the terminal device in the paging window based on the configuration information, so that when a paging cycle arrives, the paging message of the terminal device is obtained based on the location of the paging frame.

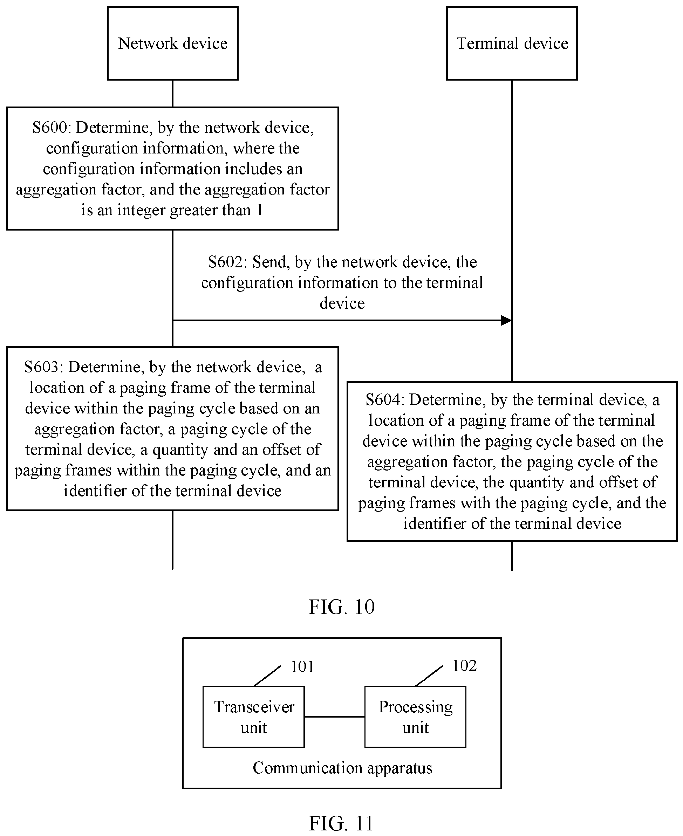

In another embodiment, reference is made to the communication method shown in FIG. 10. As shown in FIG. 10, the communication method includes:
S600. A network device determines configuration information, where the configuration information includes an aggregation factor, and the aggregation factor is an integer greater than 1.
S602: The network device sends the configuration information to a terminal device.

Correspondingly, the terminal device receives the configuration information from the network device.

The aggregation factor may refer to the description of the fourth feasible manner. Step S600 may refer to the description of step S100 in FIG. 7. Details are not described herein again.

S603. The network device determines a location of a paging frame of the terminal device within the paging cycle based on the aggregation factor, the paging cycle of the terminal device, the quantity and offset of paging frames within the paging cycle, and the identifier of the terminal device.

S604. The terminal device determines a location of the paging frame of the terminal device within the paging cycle based on the aggregation factor, the paging cycle of the terminal device, the quantity and offset of paging frames within the paging cycle, and the identifier of the terminal device.

This application imposes no limitation on a method for determining a location of a paging frame of a terminal device in a paging cycle. The following uses a terminal device as an example for description. In some feasible examples, step S604 may include: determining, by the terminal device, a location of each paging frame within the paging cycle according to the paging cycle, the quantity of paging frames within the paging cycle, and the aggregation factor; and the terminal device determines the location of the paging frame of the terminal device within the paging cycle according to the identifier of the terminal device, the quantity of paging frames within the paging cycle, and the location and offset of each paging frame in the paging window.

The location of each paging frame within the paging cycle may be referred to as a source location before the aggregation factor is used, and may be referred to as a target location after the aggregation factor is used. A method for determining the target location may be specifically as follows: The terminal device first determines a source location of each paging frame within the paging cycle according to the paging cycle and the quantity of paging frames within the paging cycle. The terminal device then centrally arranges source locations of paging frames within the paging cycle based on the aggregation factor and the location of each paging frame within the paging cycle, to obtain a target location of each paging frame in the paging window.

Step S603 or step S604 may alternatively be implemented according to the following formula (10). $\left(SFN+PF_offset\right) mod T = \left(T div N\right) / X * \left(UE_ID mod N\right)$ (10) where X is an aggregation factor, and SFN, PF_offset, UE_ID, T, and N may be as defined above.

It may be understood that, a time domain resource for sending a paging message of each terminal device is configured by using a configuration method corresponding to the formula, originally evenly distributed paging frames are uniformly distributed in a paging window. In addition, different terminal devices are evenly allocated to paging frames in the paging window, thereby preventing terminal devices from being concentrated in the same paging frame.

It should be noted that, in FIG. 10, step S603 is performed before step S604. Actually, step S603 and step S604 may be performed at the same time, or step S603 may be performed after step S604. Optionally, step S603 is performed after it is determined that the paging event of the terminal device occurs, or step S603 is performed after step S600.

It may be understood that, in the method shown in FIG. 10, the network device may aggregate originally dispersed paging frames within a paging cycle into an area. In this way, the network device sends the paging message by using an area within a partial paging cycle, so that there is an area in which no paging message is sent within the paging cycle, which can reduce power consumption of the network device.

Then, how to determine the location of the paging occasion of the paging frame of the terminal device in the paging window based on the configuration information is described.

In some feasible examples, for example, after step S202 (or step S203 or step S204) in FIG. 8A, step S302 in FIG. 8B (or step S303, step S304, step S305, or step S306), step S402 (or step S403 or step S404) in FIG. 9A, step S502 in FIG. 9B (or step S503, step S504, step S505, or step S506) and step S602 (or step S303 or step S604) in FIG. 10, the communication method may further include: determining the location of the paging occasion of the paging frame of the terminal device in the paging window based on the configuration information.

The location of the paging occasion of the paging frame of the terminal device in the paging window may be a (i_s+1)^{th} paging frame in which the terminal device receives the paging message. This application imposes no limitation on i_s, and i_s may be determined based on the identifier of the terminal device and the quantity of paging occasions in the paging frame. For example, i_s is equal to a modulus value between the identifier of the terminal device and the quantity of paging occasions in the paging frame.

Alternatively, i_s may be determined by the identifier of the terminal device, the quantity of paging times in the paging window, and the quantity of paging occasions in the paging frame. Optionally, determining a location of a paging occasion of a paging frame of the terminal device in the paging window based on the configuration information includes: The terminal device determines the location of the paging occasion of the paging frame of the terminal device in the paging window based on the identifier of the terminal device, the quantity of paging frames in the paging window, and the identifier of the terminal device. For example, the sequence R of paging occasions of paging frames of the terminal device in the paging window is first determined based on the identifier of the terminal device and the quantity of paging frames in the paging window. Then, the location of the paging occasion of the paging frame of the terminal device in the paging window is determined based on the quantity of paging occasions in the paging frame and R.

The location of the paging occasion of the paging frame of the terminal device in the paging window is determined based on the configuration information, or the location of the paging occasion of the paging frame of the terminal device in the paging window may be determined according to the following formula (10). $i _ s = floor \left(UE_ID/N1\right) mod Ns$ (11) where UE_ID, N1, and Ns may be as defined above.

A variation of formula (11) may be similar to the above formula (5), that is, N may continue to be defined in the prior art, but a value of N is equal to the quantity of paging frames within the paging window. That is, i_s is obtained based on formula (2).

The foregoing describes the method in the embodiment of this application in detail above. The following introduces an apparatus in an embodiment of this application.

Refer to FIG. 11. FIG. 11 is a diagram of a structure of a communication apparatus according to an embodiment of this application. The communication apparatus may include a transceiver unit 101 and a processing unit 102. The transceiver unit 101 may be an apparatus having input (receiving) or output (sending) of a signal, and is configured to perform signal transmission with another network device or another component in the device. The processing unit 102 may be an apparatus having a processing function, and may be configured to process a communication protocol and communication data. The central processing unit may be configured to control apparatuses (such as a hose node, a relay node or a chip), to execute a software program, and process data of the software program. The transceiver unit 101 may include one or more transceivers, and the processing unit 102 may include one or more processors. Reference may be made to the description of FIG. 2, and details are not repeated herein.

In this embodiments of this application, the communication apparatus includes a network device or a terminal device.

In an implementation scenario, the communication apparatus is a network device, where:
the processing unit 102 is configured to determine configuration information;
the transceiver unit 101 is configured to send the configuration information to a terminal device; and
the processing unit 102 is further configured to determine a paging window based on the configuration information, where the paging window is smaller than a paging cycle of the terminal device, and the network device does not send the paging message outside the paging window within the paging cycle.

Optionally, the processing unit 102 is specifically configured to obtain N1 sets of preconfigured configurations, where N1 is the quantity of paging frames in the paging window, and each of the N1 sets of configurations indicates locations and sizes of different paging windows and a location of a paging frame within the paging window; and determine the configuration information from the N1 sets of configurations by using a common group physical downlink control channel.

Optionally, the processing unit 102 is specifically configured to determine a location and a size of the paging window and a location of the paging frame of the terminal device in the paging window based on the configuration information.

Optionally, the configuration information includes a size of the paging window, and a start location of the paging window is a predefined location, or the start location of the paging window is configured by the configuration information. The processing unit 102 is specifically configured to determine the location of the paging frame of the terminal device in the paging window based on the start location and size of the paging window, the identifier of the terminal device, and the quantity and offset of paging frames in the paging window; and determine the location of the paging frame of the terminal device in the paging window based on the start location and size of the paging window and the identifier of the terminal device.

Optionally, the start location of the paging window is a predefined location, and the predefined location includes a start location of a paging cycle or a start location of a discontinuous reception cycle.

Optionally, the configuration information includes a start location and an end location of the paging window, and the processing unit 102 is specifically configured to determine the size of the paging window based on the start location and the end location of the paging window; determine a location of a paging frame of the terminal device in the paging window based on the size of the paging window, the identifier of the terminal device, and the quantity and offset of paging frames in the paging window; and determine the location of the paging frame of the terminal device in the paging window based on the start location and size of the paging window and the identifier of the terminal device.

Optionally, the location of the paging frame of the terminal device in the paging window is obtained according to the following formula: $\left(SFN+PF_offset\right) mod M = \left(M div N1\right) * \left(UE_ID mod N1\right) ,$ where
M represents the size of the paging window, N1 represents the quantity of paging frames in the paging window, UE_ID represents the identifier of the terminal device, SFN represents a system frame number of the paging frame of the terminal device in the paging window, and PF_offset represents the offset set for the paging frame, PF_offset represents an offset reconfigured by the configuration information, or PF_offset represents an originally set offset value.

Optionally, the location of the paging frame of the terminal device in the paging window is obtained according to the following formula: $\left(SFN+PF_offset\right) mod M = \left(M div N\right) * \left(UE_ID mod N\right) ,$ where
M represents the size of the paging window, N represents the quantity of paging frames within the paging cycle, N is equal to the quantity of paging frames within the paging window, UE_ID represents the identifier of the terminal device, SFN represents a system frame number of the paging frame of the terminal device in the paging window, and PF_offset represents the offset set determined for the paging frame, and PF_offset represents the offset reconfigured by configuration information, or PF_offset represents an originally set offset value.

Optionally, the location of the paging frame of the terminal device in the paging window is obtained according to the following formula: $SFN = PW_start + UE id mod M ,$ where
M represents the size of the paging window, SFN represents a system frame number of the paging frame of the terminal device in the paging window, UE_ID represents the identifier of the terminal device, and PW_start represents the start location of the paging window.

Optionally, the processing unit 102 is further configured to determine a location of a paging occasion of a paging frame of the terminal device in the paging window based on the configuration information.

Optionally, the processing unit 102 is specifically configured to determine the location of the paging occasion of the paging frame of the terminal device in the paging window based on the quantity of paging frames in the paging window, the quantity of paging occasions in the paging frame, and the identifier of the terminal device.

Optionally, the paging occasion of the paging frame of the terminal device in the paging window is a (i_s+1)^{th} paging opportunity in the paging frame, and i_s is obtained according to the following formula: $i _ s = floor \left(UE_ID/N1\right) mod Ns ,$ where
UE_ID represents the identifier of the terminal device, N1 represents the quantity of paging frames in the paging window, and Ns represents the quantity of paging occasions in the paging frame.

Optionally, the paging occasion of the paging frame of the terminal device in the paging window is a (i_s+1)^{th} paging opportunity in the paging frame, and i_s is obtained according to the following formula: $i _ s = floor \left(UE_ID/N\right) mod Ns ,$ where
UE_ID represents the identifier of the terminal device, N represents the quantity of paging frames within the paging cycle, N is equal to the quantity of paging frames within the paging window, and Ns represents the quantity of paging occasions in the paging frame.

Optionally, the configuration information further includes at least one of the following: a quantity of paging frames in the paging window, an offset of paging frames in the paging window, and a quantity of paging occasions of paging frames in the paging window.

Optionally, the size of the paging window is represented by using a quantity of time domain resource granularities, and the time domain resource granularity includes at least one of the following: a superframe, a frame, a slot, a sub-slot, and a symbol.

Optionally, the start location of the paging window is indicated by using a bitmap, a quantity of bits of the bitmap is determined based on a quotient between a total quantity of system frames within the paging cycle and the time domain resource granularity for indication, a value corresponding to each bit in the bitmap indicates whether a location of a system frame corresponding to the bit is the start location of the paging window, and the time domain resource granularity for indication is a difference between system frame numbers corresponding to two adjacent bits in the bitmap; or the start location of the paging window is indicated by using an offset of the start location of the paging cycle.

Optionally, the identifier of the terminal device includes an IMSI, an S-TMSI, and a C-RNTI.

Optionally, the paging cycle is a DRX cycle.

In another implementation scenario, the communication apparatus is a terminal device, where:

The transceiver unit 101 is configured to receive configuration information from a network device.

The processing unit 102 is configured to determine a paging window based on the configuration information, where the paging window is smaller than a paging cycle of the terminal device, and the terminal device obtains no paging message outside the paging window within the paging cycle.

Optionally, the processing unit 102 is specifically configured to determine a location and a size of the paging window and a location of the paging frame of the terminal device in the paging window based on the configuration information.

Optionally, the configuration information includes a size of the paging window, and a start location of the paging window is a predefined location, or the start location of the paging window is configured by the configuration information. The processing unit 102 is specifically configured to determine the location of the paging frame of the terminal device in the paging window based on the start location and size of the paging window, the identifier of the terminal device, and the quantity and offset of paging frames in the paging window; and determine the location of the paging frame of the terminal device in the paging window based on the start location and size of the paging window and the identifier of the terminal device.

Optionally, the start location of the paging window is a predefined location, and the predefined location includes a start location of a paging cycle or a start location of a discontinuous reception cycle.

Optionally, the configuration information includes a start location and an end location of the paging window, and the processing unit 102 is specifically configured to determine the size of the paging window based on the start location and the end location of the paging window; determine a location of a paging frame of the terminal device in the paging window based on the size of the paging window, the identifier of the terminal device, and the quantity and offset of paging frames in the paging window; and determine the location of the paging frame of the terminal device in the paging window based on the start location and size of the paging window and the identifier of the terminal device.

Optionally, the location of the paging frame of the terminal device in the paging window is obtained according to the following formula: $\left(SFN+PF_offset\right) mod M = \left(M div N1\right) * \left(UE_ID mod N1\right) ,$ where
M represents the size of the paging window, N1 represents the quantity of paging frames in the paging window, UE_ID represents the identifier of the terminal device, SFN represents a system frame number of the paging frame of the terminal device in the paging window, and PF_offset represents the offset set for the paging frame, PF_offset represents an offset reconfigured by the configuration information, or PF_offset represents an originally set offset value.

Optionally, the location of the paging frame of the terminal device in the paging window is obtained according to the following formula: $\left(SFN+PF_offset\right) mod M = \left(M div N\right) * \left(UE_ID mod N\right) ,$ where
M represents the size of the paging window, N represents the quantity of paging frames within the paging cycle, N is equal to the quantity of paging frames within the paging window, UE_ID represents the identifier of the terminal device, SFN represents a system frame number of the paging frame of the terminal device in the paging window, and PF_offset represents the offset set determined for the paging frame, and PF_offset represents the offset reconfigured by configuration information, or PF_offset represents an originally set offset value.

Optionally, the location of the paging frame of the terminal device in the paging window is obtained according to the following formula: $SFN = PW_start + UE id mod M ,$ where
M represents the size of the paging window, SFN represents a system frame number of the paging frame of the terminal device in the paging window, UE_ID represents the identifier of the terminal device, and PW_start represents the start location of the paging window.

Optionally, the processing unit 102 is further configured to determine a location of a paging occasion of a paging frame of the terminal device in the paging window based on the configuration information.

Optionally, the processing unit 102 is specifically configured to determine the location of the paging occasion of the paging frame of the terminal device in the paging window based on the quantity of paging frames in the paging window, the quantity of paging occasions in the paging frame, and the identifier of the terminal device.

Optionally, the paging occasion of the paging frame of the terminal device in the paging window is a (i_s+1)^{th} paging opportunity in the paging frame, and i_s is obtained according to the following formula: $i _ s = floor \left(UE_ID/N1\right) mod Ns ,$ where
UE_ID represents the identifier of the terminal device, N1 represents the quantity of paging frames in the paging window, and Ns represents the quantity of paging occasions in the paging frame.

Optionally, the paging occasion of the paging frame of the terminal device in the paging window is a (i_s+1)^{th} paging opportunity in the paging frame, and i_s is obtained according to the following formula: $i _ s = floor \left(UE_ID/N\right) mod Ns ,$ where
UE_ID represents the identifier of the terminal device, N represents the quantity of paging frames within the paging cycle, N is equal to the quantity of paging frames within the paging window, and Ns represents the quantity of paging occasions in the paging frame.

Optionally, the configuration information further includes at least one of the following: a quantity of paging frames in the paging window, an offset of paging frames in the paging window, and a quantity of paging occasions of paging frames in the paging window.

Optionally, the size of the paging window is represented by using a quantity of time domain resource granularities, and the time domain resource granularity includes at least one of the following: a superframe, a frame, a slot, a sub-slot, and a symbol.

Optionally, the start location of the paging window is indicated by using a bitmap, a quantity of bits of the bitmap is determined based on a quotient between a total quantity of system frames within the paging cycle and the time domain resource granularity for indication, a value corresponding to each bit in the bitmap indicates whether a location of a system frame corresponding to the bit is the start location of the paging window, and the time domain resource granularity for indication is a difference between system frame numbers corresponding to two adjacent bits in the bitmap; or the start location of the paging window is indicated by using an offset of the start location of the paging cycle.

Optionally, the identifier of the terminal device includes an IMSI, an S-TMSI, and a C-RNTI.

Optionally, the paging cycle is a DRX cycle.

In another implementation scenario, the communication apparatus is a network device, where:
a processing unit is configured to determine configuration information, where the configuration information includes an aggregation factor, and the aggregation factor is an integer greater than 1;
a transceiver unit is configured to send the configuration information to a terminal device; and
the processing unit is further configured to determine a location of the paging frame of the terminal device in the paging window based on the aggregation factor, the paging cycle of the terminal device, the quantity and offset of paging frames within the paging cycle, and the identifier of the terminal device.

Optionally, the paging cycle is a DRX cycle.

Optionally, the location of the paging frame of the terminal device with the paging cycle is obtained according to the following formula: $\left(SFN+PF_offset\right) mod T = \left(T div N\right) / X * \left(UE_ID mod N\right) ,$ where
SFN represents a system frame number of the paging frame of the terminal device within the paging cycle, PF_offset represents an offset of the paging frame, T represents the paging cycle, and UE_ID represents the identifier of the terminal device; and N represents the quantity of paging frames within the paging cycle.

In another implementation scenario, the communication apparatus is a terminal device, where:
a transceiver unit is configured to receive configuration information from a network device, where the configuration information includes an aggregation factor, and the aggregation factor is an integer greater than 1;
a processing unit is configured to determine a location of a paging frame of the terminal device within the paging cycle based on the aggregation factor, the paging cycle of the terminal device, the quantity and offset of paging frames within the paging cycle, and the identifier of the terminal device.

Optionally, the paging cycle is a DRX cycle.

Optionally, the location of the paging frame of the terminal device with the paging cycle is obtained according to the following formula: $\left(SFN+PF_offset\right) mod T = \left(T div N\right) / X * \left(UE_ID mod N\right) ,$ where
SFN represents a system frame number of the paging frame of the terminal device within the paging cycle, PF_offset represents an offset of the paging frame, T represents the paging cycle, and UE_ID represents the identifier of the terminal device; and N represents the quantity of paging frames within the paging cycle.

It should be noted that, for implementation of each unit, reference may be made to corresponding description in at least one embodiment shown in FIG. 7, FIG. 8A, FIG. 8B, FIG. 9A, FIG. 9B, and FIG. 10.

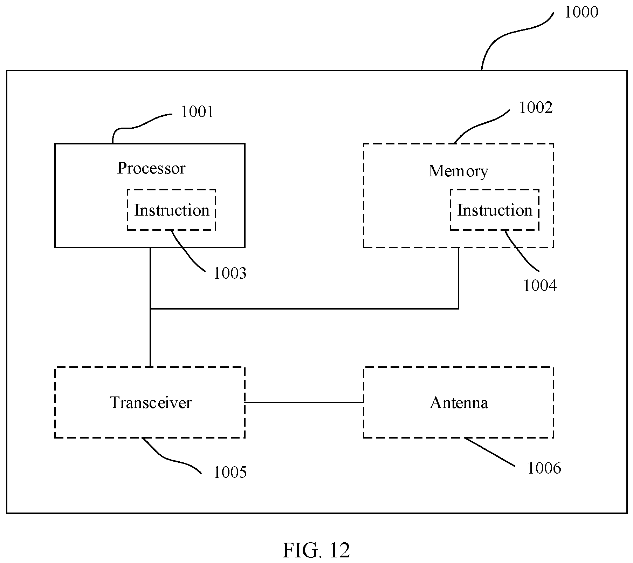

Refer to FIG. 12. FIG. 12 is a diagram of a structure of another communication apparatus according to an embodiment of this application. As shown in FIG. 12, the communication apparatus 1000 may include one or more processors 1001, and the processor 1001 may also be referred to as a processing unit, and may implement a corresponding control function. For the processor 1001, reference may be made to the description of the processor 301 in FIG. 2. Details are not described herein again.

In an optional design, the processor 1001 may also store an instruction 1003, and the instruction 1003 may be run by the processor 1001, so that the communication apparatus 1000 performs the communication method described in the foregoing method embodiments.

In an optional design, the processor 1001 may include a transceiver unit configured to implement receiving and sending functions. For example, the transceiver unit may be a transceiver circuit, or an interface, or an interface circuit, or a communication interface. The transceiver circuit, interface, or interface circuit configured to implement the receiving function and the sending function may be separated or integrated together. The transceiver circuit, interface, or interface circuit may be configured to read and write code/data, or the transceiver circuit, interface, or interface circuit may be configured to transmit or transfer a signal.

In still another possible design, the communication apparatus 1000 may include a circuit, and the circuit may implement a sending, receiving, or communication function in the foregoing communication method embodiment.

Optionally, the communication apparatus 1000 may include one or more memories 1002, the memory may store an instruction 1004, and the instruction 1004 may be run on the processor 1001, so that the communication apparatus 1000 performs the communication method described in the foregoing method embodiments. Optionally, the memory may also store data. Optionally, the processor 1001 may also store an instruction and/or data. The processor 1001 and the memory 1002 may be separately disposed, or may be integrated. For example, the correspondence described in the foregoing method embodiments may be stored in the memory 1002, or stored in the processor 1001.

Optionally, the communication apparatus 1000 may further include a transceiver 1005 and/or an antenna 1006. The processor 1001 may be referred to as a processing unit, and controls the communication apparatus 1000. The transceiver 1005 may be referred to as a transceiver unit, a transceiver, a transceiver circuit, a transceiver apparatus, a transceiver module, or the like, and is configured to implement a transceiver function.

The processor and the transceiver described in this application may be implemented on an integrated circuit (integrated circuit, IC), an analog IC, a radio frequency integrated circuit (RFIC), a mixed-signal IC, an application-specific integrated circuit (application specific integrated circuit, ASIC), a printed circuit board (printed circuit board, PCB), an electronic device, or the like. The processor and transceiver may also be fabricated using various IC process technologies, such as complementary metal oxide semiconductors (complementary metal oxide semiconductor, CMOS), N-type metal oxide semiconductor (nMetal-oxide-semiconductor, NMOS), P-type metal oxide semiconductor (positive channel metal oxide semiconductor, PMOS), bipolar junction transistor (Bipolar Junction Transistor, BJT), bipolar CMOS (BiCMOS), and silicon germanium (SiGe), gallium arsenide (GaAs).

Optionally, the communication apparatus 1000 in the embodiment of this application may be configured to perform steps described in at least one communication method in FIG. 7, FIG. 8A, FIG. 8B, FIG. 9A, FIG. 9B, and FIG. 10 in the embodiment of this application.

The communication apparatus described in the foregoing embodiment may be a network device or a terminal device. It should be understood that a scope of the communication apparatus described in this application is not limited thereto, and a structure of the communication apparatus may not be limited in FIG. 12. The communication apparatus may be an independent device or may be a part of a large device. For example, the communication apparatus may be:
(1) an independent integrated circuit IC, a chip, or a chip system or subsystem;
(2) a set having one or more ICs. Optionally, the IC set may also include a storage component configured to store data and/or an instruction.
(3) ASIC, for example, modem (mobile station modem, MSM) of mobile radio;
(4) a module that can be embedded in another device.

An embodiment of this application further provides a computer-readable storage medium that stores a computer program. When executed by a processor, the program may implement a procedure related to a network device or a terminal device in the communication method provided in the foregoing method embodiments. An embodiment of this application further provides a computer program product. The computer program product is configured to store a computer program. When the computer program runs on a computer (or a processor), the computer is enabled to perform one or more steps in any one of the foregoing communication methods. If each component module of the foregoing device is implemented in a form of a software functional unit and sold or used as an independent product, the component modules may be stored in a computer-readable storage medium.

An embodiment of this application provides a chip, including a processor, configured to invoke, from a memory, an instruction stored in the memory and run, so that a communication apparatus on which the chip is installed performs any one of the foregoing methods.

An embodiment of this application further provides another chip, including: an input interface, an output interface, and a processing circuit, where the input interface, the output interface, and the circuit are connected by using an internal connection path, and the processing circuit is configured to perform any one of the foregoing methods.

Optionally, the chip further includes a memory. The input interface, the output interface, the processor, and the memory are connected by using an internal connection path. The processor is configured to execute a code in the memory. When the code is executed, the processor is configured to perform any one of the foregoing methods.

An embodiment of this application further provides a chip system, including at least one processor and a communication interface, where the communication interface and the at least one processor are interconnected by using a line, and the at least one processor is configured to run a computer program or an instruction, to perform any of the foregoing methods. The chip system may include a chip, or may include a chip and another discrete component.

An embodiment of this application further provides a communication system. The system includes a network device and a terminal device. Specific descriptions may refer to the communication methods shown in FIG. 7, FIG. 8A, FIG. 8B, FIG. 9A, FIG. 9B, and FIG. 10.

A person of ordinary skill in the art may be aware that units and algorithm steps of the examples described with reference to embodiments disclosed in this specification may be implemented through electronic hardware or a combination of computer software and electronic hardware. Whether the functions are executed by hardware or software depends on specific applications and design constraint conditions of the technical solutions. Persons skilled in the art may use different methods to implement the described functions for each particular application, but it should not be considered that such an implementation goes beyond the scope of this application.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual coupling or direct coupling or communication connection may be through some interfaces, and the indirect coupling or communication connection of the apparatus or the unit may be in an electrical, mechanical, or other form.

The units described as separate parts may or may not be physically separated, and parts displayed as units may or may not be physical units, in other words, may be located in one place, or may be distributed on a plurality of network units. Some or all of the units may be selected based on actual requirements to achieve the objectives of the solutions in the embodiments.

In addition, the functional units in the embodiments of this application may be integrated into one processing unit, or each unit may exist alone physically, or two or more units may be integrated into one unit. The steps of the method in the embodiments of this application may be adjusted in terms of sequence, combined, and deleted based on actual needs. The steps of each embodiment may be partially performed (for example, the terminal may not perform the steps performed by the terminal in the foregoing embodiment.). The execution sequence of different steps may be changed. The embodiments described in this specification may be combined with other embodiments, different embodiments may be combined with each other, and different steps of different embodiments in this specification may be combined.

The modules/units in the apparatus in the embodiment of this application may be combined, divided, and deleted according to an actual requirement.

"Embodiment" mentioned in the specification means that particular features, structures, or characteristics described with reference to the embodiment may be included in at least one embodiment of this application. The term appearing at various locations in the specification does not necessarily refer to a same embodiment, or an independent or alternative embodiment mutually exclusive with another embodiment.

In this application, it may refer to a communication protocol or a specification, for example, a 3GPP communication protocol.

The terms "first", "second", "third", "fourth", and the like (if any) in the embodiments of this application are used to distinguish between similar objects, and do not need to be used to describe a specific order or sequence.

In the embodiments of this application, "include" may be an inclusion relationship, or may be an equal relationship. For example, if A includes B, A may include other content in addition to B, or A and B are the same content.

In the description of this application, unless otherwise specified, the character "/" indicates an "or" relationship between associated objects. For example, A/B may represent A or B. The term "and/or" in this application is only an association for describing associated objects and represents that three relationships may exist. For example, A and/or B may represent the following three cases: Only A exists, both A and B exist, and only B exists, where A and B may be in a singular or plural form. In addition, in the description of this application, unless otherwise stated, "a plurality of" means two or more. "At least one of the following items (pieces)" or a similar expression thereof refers to any combination of these items, including any combination of singular items (pieces) or plural items (pieces). For example, at least one of a, b, or c may represent: a, b, c, a-b, a-c, b-c, or a-b-c, where there may be a single a, b, c, or there may be a plurality of a, b, c.

In the embodiments of this application, information (information), signal (signal), message (message), and channel (channel) may be sometimes used interchangeably. It should be noted that, when differences between them are not emphasized, their meanings are consistent. "of (of)", "corresponding (corresponding, relevant)", and "corresponding (corresponding)" may sometimes be used in a mixed manner, and it should be noted that when differences between them are not emphasized, their meanings are consistent.

It should be understood that, in the embodiments of this application, sequence numbers of the foregoing processes do not mean execution sequences. The execution sequences of the processes should be determined according to functions and internal logic of the processes, and should not be construed as any limitation on the implementation processes of the embodiments of this application.

## Claims

1. A communication method, applied to a terminal device, wherein the method comprises:
receiving, by the terminal device, configuration information from a network device; and
determining, by the terminal device, a paging window based on the configuration information, wherein the paging window is smaller than a paging cycle of the terminal device, and the terminal device does not obtain a paging message outside the paging window within the paging cycle.

2. The method according to claim 1, wherein determining the paging window based on the configuration information comprises:
determining a location and a size of the paging window based on the configuration information, and determining a location of a paging frame of the terminal device in the paging window.

3. The method according to claim 2, wherein the method comprises:
the configuration information comprises the size of the paging window, and a start location of the paging window is a predefined location, or the start location of the paging window is configured by the configuration information; and
determining the location of the paging frame of the terminal device in the paging window based on the start location and the size of the paging window, an identifier of the terminal device, and a quantity and an offset of paging frames in the paging window.

4. The method according to claim 2, wherein the method further comprises:
the configuration information comprises the size of the paging window, and a start location of the paging window is a predefined location, or the start location of the paging window is configured by the configuration information; and
determining the location of the paging frame of the terminal device in the paging window based on the start location and the size of the paging window and an identifier of the terminal device.

5. The method according to claim 3 or 4, wherein the predefined location comprises a start location of the paging cycle or a start location of a discontinuous reception cycle.

6. The method according to claim 2, wherein the method comprises:
the configuration information comprises a start location and an end location of the paging window;
determining the size of the paging window based on the start location and the end location of the paging window; and
determining the location of the paging frame of the terminal device in the paging window based on the size of the paging window, an identifier of the terminal device, a quantity and an offset of paging frames in the paging window.

7. The method according to claim 2, wherein the method comprises:
the configuration information comprises a start location and an end location of the paging window;
determining the size of the paging window based on the start location and the end location of the paging window; and
determining the location of the paging frame of the terminal device in the paging window based on the start location and the size of the paging window and an identifier of the terminal device.

8. The method according to claim 3 or 6, wherein the method comprises:
the location of the paging frame of the terminal device in the paging window is obtained according to the following formula: $\left(SFN+PF_offset\right) mod M = \left(M div N1\right) * \left(UE_ID mod N1\right) ,$ wherein
M represents the size of the paging window, N1 represents the quantity of paging frames in the paging window, UE_ID represents the identifier of the terminal device, SFN represents a system frame number of the paging frame of the terminal device in the paging window, and PF_offset represents the offset set for the paging frame, PF_offset represents an offset reconfigured by the configuration information, or PF_offset represents an originally set offset value.

9. The method according to claim 3 or 6, wherein the method comprises:
the location of the paging frame of the terminal device in the paging window is obtained according to the following formula: $\left(SFN+PF_offset\right) mod M = \left(M div N\right) * \left(UE_ID mod N\right) ,$ wherein
M represents the size of the paging window, N represents the quantity of paging frames within the paging cycle, N is equal to the quantity of paging frames within the paging window, UE_ID represents the identifier of the terminal device, SFN represents a system frame number of the paging frame of the terminal device in the paging window, and PF_offset represents the offset set for the paging frame, PF_offset represents the offset reconfigured by configuration information, or PF_offset represents an originally set offset value.

10. The method according to claim 4 or 7, wherein the method comprises:
the location of the paging frame of the terminal device in the paging window is obtained according to the following formula: $SFN = PW_start + UE id mod M ,$ wherein
M represents the size of the paging window, SFN represents a system frame number of the paging frame of the terminal device in the paging window, UE_ID represents the identifier of the terminal device, and PW_start represents the start location of the paging window.

11. The method according to any one of claims 1 to 10, wherein the method further comprises:
determining a location of a paging occasion in the paging frame of the terminal device in the paging window based on the configuration information.

12. The method according to claim 11, wherein determining the location of the paging occasion in the paging frame of the terminal device in the paging window based on the configuration information comprises:
determining the location of the paging occasion of the paging frame of the terminal device in the paging window based on the quantity of paging frames in the paging window, a quantity of paging occasions in the paging frame, and the identifier of the terminal device.

13. The method according to claim 12, wherein the method comprises:
the paging occasion in the paging frame of the terminal device in the paging window is a (i_s+1)^{th} paging opportunity in the paging frame, and i_s is obtained according to the following formula: $i _ s = floor \left(UE_ID/N1\right) mod Ns ,$ wherein
UE_ID represents the identifier of the terminal device, N1 represents the quantity of paging frames in the paging window, and Ns represents the quantity of paging occasions in the paging frame.

14. The method according to claim 12, wherein the method comprises:
the paging occasion in the paging frame of the terminal device in the paging window is a (i_s+1)^{th} paging opportunity in the paging frame, and i_s is obtained according to the following formula: $i _ s = floor \left(UE_ID/N\right) mod Ns ,$ wherein
UE_ID represents the identifier of the terminal device, N represents the quantity of paging frames within the paging cycle, N is equal to the quantity of paging frames within the paging window, and Ns represents the quantity of paging occasions in the paging frame.

15. The method according to any one of claims 3 to 14, wherein the configuration information further comprises at least one of the following: the quantity of paging frames in the paging window, the offset of paging frames in the paging window, and the quantity of paging occasions in the paging frames in the paging window.

16. The method according to any one of claims 3 to 15, wherein the size of the paging window is represented by using a quantity of time domain resource granularities, and the time domain resource granularities comprise at least one of the following: a superframe, a frame, a slot, a sub-slot, and a symbol.

17. The method according to any one of claims 3 to 16, wherein the start location of the paging window is indicated by using a bitmap, a quantity of bits of the bitmap is determined based on a quotient between a total quantity of system frames within the paging cycle and the time domain resource granularity for indication, a value corresponding to each bit in the bitmap indicates whether a location of a system frame corresponding to the bit is the start location of the paging window, and the time domain resource granularity for indication is a difference between system frame numbers corresponding to two adjacent bits in the bitmap; or
the start location of the paging window is indicated by using an offset of the start location of the paging cycle.

18. The method according to any one of claims 3 to 17, wherein the identifier of the terminal device comprises an international mobile subscriber identity IMSI, a temporary mobile subscriber identity S-TMSI, and a cell radio network temporary identifier C-RNTI.

19. The method according to any one of claims 1 to 18, wherein the configuration information comprises at least one of the following: system information, radio resource control information, information about a medium access control control element, and downlink control information.

20. The method according to any one of claims 1 to 19, wherein the paging cycle is the discontinuous reception DRX cycle.

21. A communication method, applied to a network device, wherein the method comprises:
determining, by the network device, configuration information;
sending, by the network device, the configuration information to the terminal device; and
determining, by the network device, a paging window based on the configuration information, wherein the paging window is smaller than a paging cycle of the terminal device, and the network device does not send the paging message outside the paging window within the paging cycle.

22. The method according to claim 21, wherein determining, by the network device, the configuration information comprises:
obtaining, by the network device, N1 sets of preconfigured configurations, wherein N1 represents a quantity of paging frames in the paging window, and each configuration in the N1 sets of configurations indicates locations and sizes of different paging windows and locations of paging frames in the paging window; and
determining, by the network device, the configuration information from the N1 sets of configurations through a common group physical downlink control channel.

23. The method according to claim 21 or 22, wherein the method comprises:
the configuration information comprises the size of the paging window, and a start location of the paging window is a predefined location, or the start location of the paging window is configured by the configuration information; and
determining the location of the paging frame of the terminal device in the paging window based on the start location and the size of the paging window, an identifier of the terminal device, and a quantity and an offset of paging frames in the paging window.

24. The method according to claim 21 or 22, wherein the method comprises:
the configuration information comprises the size of the paging window, and a start location of the paging window is a predefined location, or the start location of the paging window is configured by the configuration information; and
determining the location of the paging frame of the terminal device in the paging window based on the start location and the size of the paging window and an identifier of the terminal device.

25. The method according to claim 21 or 22, wherein the method comprises:
the configuration information comprises a start location and an end location of the paging window;
determining the size of the paging window based on the start location and the end location of the paging window; and
determining the location of the paging frame of the terminal device in the paging window based on the size of the paging window, an identifier of the terminal device, a quantity and an offset of paging frames in the paging window.

26. The method according to claim 21 or 22, wherein the method comprises:
the configuration information comprises a start location and an end location of the paging window;
determining the size of the paging window based on the start location and the end location of the paging window; and
determining the location of the paging frame of the terminal device in the paging window based on the start location and the size of the paging window and an identifier of the terminal device.

27. The method according to claim 23 or 25, wherein the method comprises:
the location of the paging frame of the terminal device in the paging window is obtained according to the following formula: $\left(SFN+PF_offset\right) mod M = \left(M div N1\right) * \left(UE_ID mod N1\right) ,$ wherein
M represents the size of the paging window, N1 represents the quantity of paging frames in the paging window, UE_ID represents the identifier of the terminal device, SFN represents a system frame number of the paging frame of the terminal device in the paging window, and PF_offset represents the offset set for the paging frame, PF_offset represents an offset reconfigured by configuration information, or PF_offset represents an originally set offset value.

28. The method according to claim 23 or 25, wherein the method comprises:
the location of the paging frame of the terminal device in the paging window is obtained according to the following formula: $\left(SFN+PF_offset\right) mod M = \left(M div N\right) * \left(UE_ID mod N\right) ,$ wherein
M represents the size of the paging window, N represents the quantity of paging frames within the paging cycle, N is equal to the quantity of paging frames within the paging window, UE_ID represents the identifier of the terminal device, SFN represents a system frame number of the paging frame of the terminal device in the paging window, and PF_offset represents the offset set for the paging frame, PF_offset represents the offset reconfigured by configuration information, or PF_offset represents an originally set offset value.

29. The method according to claim 24 or 26, wherein the method comprises:
the location of the paging frame of the terminal device in the paging window is obtained according to the following formula: $SFN = PW_start + UE id mod M ,$ wherein
M represents the size of the paging window, SFN represents a system frame number of the paging frame of the terminal device in the paging window, UE_ID represents the identifier of the terminal device, and PW_start represents the start location of the paging window.

30. The method according to any one of claims 21 to 29, wherein the method further comprises:
determining a location of a paging occasion in the paging frame of the terminal device in the paging window based on the configuration information.

31. The method according to claim 30, wherein the determining the location of the paging occasion in the paging frame of the terminal device in the paging window based on the configuration information comprises:
determining the location of the paging occasion of the paging frame of the terminal device in the paging window based on the quantity of paging frames in the paging window, a quantity of paging occasions in the paging frame, and the identifier of the terminal device.

32. The method according to claim 31, wherein the method comprises:
the paging occasion in the paging frame of the terminal device in the paging window is a (i_s+1)^{th} paging opportunity in the paging frame, and i_s is obtained according to the following formula: $i _ s = floor \left(UE_ID/N1\right) mod Ns ,$ wherein
UE_ID represents the identifier of the terminal device, N1 represents the quantity of paging frames in the paging window, and Ns represents the quantity of paging occasions in the paging frame.

33. The method according to claim 31, wherein the method comprises:
the paging occasion in the paging frame of the terminal device in the paging window is a (i_s+1)^{th} paging opportunity in the paging frame, and i_s is obtained according to the following formula: $i _ s = floor \left(UE_ID/N\right) mod Ns ,$ wherein
UE_ID represents the identifier of the terminal device, N represents the quantity of paging frames within the paging cycle, N is equal to the quantity of paging frames in the paging window, and Ns represents the quantity of paging occasions in the paging frame.

34. A communication method, applied to a terminal device, wherein the method comprises:
receiving, by the terminal device, configuration information from a network device, wherein the configuration information aggregates a factor, and the aggregation factor is an integer greater than 1; and
determining, by the terminal device, a location of a paging frame of the terminal device within a paging cycle based on the aggregation factor, a paging cycle of the terminal device, a quantity and an offset of paging frames within the paging cycle, and an identifier of the terminal device.

35. A communication method, applied to a network device, wherein the method comprises:
determining, by the network device, configuration information, wherein the configuration information aggregates a factor, and the aggregation factor is an integer greater than 1;
sending, by the network device, the configuration information to the terminal device; and
determining, by the network device, a location of a paging frame of the terminal device within a paging cycle based on the aggregation factor, a paging cycle of the terminal device, a quantity and an offset of paging frames within the paging cycle, and an identifier of the terminal device.

36. The method according to claim 34 or 35, wherein the method comprises:
the location of the paging frame of the terminal device within the paging cycle is obtained according to the following formula: $\left(SFN+PF_offset\right) mod T = \left(T div N\right) / X * \left(UE_ID mod N\right) ,$ wherein
SFN represents a system frame number of the paging frame of the terminal device within the paging cycle, PF_offset represents an offset of the paging frame, T represents the paging cycle, and UE_ID represents the identifier of the terminal device; and N represents the quantity of paging frames within the paging cycle.

37. A communication apparatus, comprising a unit for implementing the method according to any one of claims 1 to 36.

38. A communication apparatus, comprising a processor, wherein the processor is configured to execute instructions stored in a memory, and when the instructions are executed, the communication method according to any one of claims 1 to 36 is implemented.

39. A computer-readable storage medium, wherein the computer-readable storage medium stores a computer program, and when the computer program is run on one or more processors, the method according to any one of claims 1-36 is implemented.
